# EUROPÄISCHE PATENTSCHRIFT

(11) **EP 4 441 149 B1**
(45) Veröffentlichungstag und Bekanntmachung des Hinweises auf die Patenterteilung: **31.12.2025**
(21) Anmeldenummer: 22822353.3
(22) Anmeldetag: 24.11.2022
(51) Int. Cl.: C08L 83/04

(54) **ZUSAMMENSETZUNG FÜR SILIKONKAUTSCHUKMASSEN**
COMPOSITION FOR SILICONE RUBBER MATERIALS
COMPOSITION POUR MATÉRIAUX DE CAOUTCHOUC DE SILICONE

(30) Priorität: 30.11.2021 DE 102021131400
(43) Veröffentlichungstag der Anmeldung: 09.10.2024
(73) Patentinhaber: Nitrochemie Aschau GmbH, 84544 Aschau am Inn (DE)
(72) Erfinder: SCHUCK, Rüdiger, 25727 Suederhasted (DE); LIPPSTREU, Jörg, 83329 Waging am See (DE); KRUPP, Alexis, 84478 Waldkraiburg (DE); KNOTT, Thomas, 84453 Mühldorf (DE); PICHL, Ulrich, 84544 Aschau (DE)
(74) Vertreter: Müller Schupfner & Partner Patent- und Rechtsanwaltspartnerschaft mbB (Muc)
(86) Internationale Anmeldenummer: PCT/EP2022/083121
(87) Internationale Veröffentlichungsnummer: WO 2023/099331

(56) Entgegenhaltungen:
- US-A1- 2021 324 195

## Beschreibung

Die Erfindung betrifft eine härtbare Zusammensetzung, umfassend ein Polyorganosiloxan, einen Vernetzer mit geeigneten Austrittsgruppen und ein heterocyclisches Azasilan sowie ein Verfahren zur Herstellung der härtbaren Zusammensetzung und die Verwendung als Dichtmittel, Klebstoff, Beschichtungsmittel, Fugenmaterial, Vergussmasse, Adhäsiv und in Farben.

Silikonkautschukmassen sind Werkstoffe mit elastischen Eigenschaften und haben vielfältige Anwendungsmöglichkeiten, vor allem im Sanitärbereich und Hochbau, beispielsweise als Dichtstoffe, Fugenmaterial, Beschichtungsmittel, Vergussmasse und Klebstoffe für verschiedenste Materialien wie Glas, Porzellan, Keramik, Stein, Kunststoffe, Metalle, Holz etc. Häufig werden kalthärtende Silikonkautschukmassen eingesetzt, auch RTV-(Raumtemperaturvernetzende)-Silikonkautschukmassen genannt, und hier insbesondere Einkomponenten-RTV-Silikonkautschukmassen (RTV-1). Diese Silikonkautschukmassen sind üblicherweise plastisch verformbare Mischungen aus Polyorganosiloxanen mit vernetzbaren funktionellen Gruppen und geeigneten Vernetzern (Härtern), die unter Feuchtigkeitsausschluss aufbewahrt werden. Diese Mischungen vernetzen unter dem Einfluss von Wasser oder Luftfeuchtigkeit bei Raumtemperatur. Dieser Vorgang wird als Aushärten bezeichnet. Zusätzlich kommen in den Silikonkautschukmassen regelmäßig Haftvermittler zum Einsatz. Sie übernehmen in Silikonkautschukmassen (z.B. in Dicht- oder Klebstoffen) die Aufgabe eine gute Haftung auf verschiedenen Untergründen.

In kalthärtenden Silikonkautschukmassen werden in der Regel Polyorganosiloxane (Silikone) eingesetzt, die zwei oder mehr vernetzbare funktionelle Gruppen tragen, zusammen mit polyfunktionellen Härtern. Große Bedeutung kommt hierbei den α,ω-Dihydroxypolyorganosiloxanen als difunktionelle Polyorganosiloxane zu. Die Vernetzungsmittel bzw. Härter besitzen oftmals hydrolysierbare SiX-Gruppen, wobei durch Hydrolyse Abgangsgruppen freigesetzt werden, die eine Klassifizierung der Härter in saure, neutrale oder basische Systeme erlauben. Bekannte Abgangsgruppen sind beispielsweise Carbonsäuren, Alkohole und Oxime.

Die Aushärtung, Vernetzung oder Polymerisation von RTV-1-Silikonkautschukmassen kann durch die Zugabe geeigneter Katalysatoren noch beschleunigt werden. Hierbei haben sich Zinnverbindungen als vorteilhafte Katalysatoren herausgestellt, da sie eine hohe katalytische Aktivität aufweisen.

In der DE 10 2015 204 787 A1 sind härtbare Silikonkautschukmassen beschrieben, enthaltend mindestens ein Polyorganosiloxan, das mindestens eine an das Siliziumatom gebundene Hydroxygruppe aufweist, mindestens ein Silan, ein Aminosilan und eine Zinnverbindung als Katalysator. Zinnverbindungen weisen jedoch den Nachteil auf, dass sie toxisch sind, insbesondere die in der Regel eingesetzten Alkylzinnverbindungen. Zudem ist die Lagerstabilität und Haftung auf einer breiten Palette von Untergründen noch verbesserungsbedürftig.

In der EP 3 392 313 A1 sind härtbare Silikonkautschukmassen beschrieben, die eine Silikonverbindung mit zwei terminalen Hydroxygruppen enthält, einen Katalysator, der eine Metall-Siloxan-Silanol(at)-Verbindung enthält und einen Vernetzer, der ein Silan mit entsprechenden Austrittsgruppen aufweist. Der Katalysator kann dabei insbesondere auch zinnfrei sein. Die Lagerstabilität und Haftung auf verschiedenen Untergründen ist aber noch verbesserungsbedürftig.

In der EP 3 613 803 A1 ist eine Zusammensetzung für Silikonkautschukmassen beschrieben, wobei die Zusammensetzung einen Härter in Form eines Silans mit entsprechenden Austrittsgruppen umfasst sowie mindestens ein heterocyclisches Organosilan.

Die oben beschriebenen Zusammensetzungen sind RTV-1-Silikonkautschukmassen, die in Gegenwart von Luftfeuchtigkeit bei Raumtemperatur aushärten, es ist jedoch die Lagerstabilität dieser Zusammensetzungen und die Haftung auf verschiedenen Untergründen noch verbesserungsbedürftig.

Das Dokument US 2021/324195 A1 offenbart Zusammensetzungen, die ein hydroxyterminiertes Polysiloxan, einen Ethyllactatosilan-Vernetzer, einen Katalysator, einige Zusatzstoffe und auch ein Azasilan-BDC umfassen.

Aufgabe der Erfindung ist es daher diese Nachteile zu überwinden und eine Zusammensetzung auf Silikonkautschukbasis bereitzustellen, die bei Raumtemperatur aushärtet, eine hohe Lagerstabilität aufweist und eine gute Haftung auf allen gängigen Materialien bzw. Untergründen zeigt.

Diese Aufgabe wird durch die im Anspruch 1 angegebene Zusammensetzung, das im Anspruch 14 angegebene Verfahren und die im Anspruch 15 angegebenen Verwendungen gelöst. Vorteilhafte Ausgestaltungen finden sich unter anderem in den Unteransprüchen und werden nachfolgend noch näher erläutert.

In einer Ausführungsform umfasst die erfindungsgemäße Zusammensetzung
(a) ein Polyorganosiloxan der Formel HO-(SiR^{l}R^{m}O)ₒ-H, wobei
jedes R^{l} und R^{m} unabhängig voneinander steht für
einen optional substituierten Alkyl-, Alkenyl- oder Alkinylrest;
einen optional substituierten cycloaliphatischen Rest, Arylrest oder Aralkylrest; oder
einen optional substituierten heteroalicyclischen Rest oder Heteroarylrest;
und o eine ganze Zahl von 5 bis 5000 ist,
(b) einen Vernetzer mit der Formel Si(R)ₘ(R^{a})₄₋ₘ, wobei
jedes R unabhängig voneinander steht für
einen optional substituierten Alkyl-, Alkenyl- oder Alkinylrest;
einen optional substituierten cycloaliphatischen Rest, Arylrest oder Aralkylrest; oder
einen optional substituierten heteroalicyclischen Rest oder Heteroarylrest;
m eine ganze Zahl von 0 bis 2 ist,
jedes R^{a} unabhängig voneinander ausgewählt ist aus der Gruppe bestehend aus
(b1) einem Hydroxycarbonsäureesterrest der Formel (I): 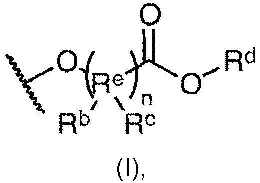 worin
   jedes R^{b} und R^{c} jeweils unabhängig voneinander steht für
   Wasserstoff;
   einen optional substituierten Alkyl-, Alkenyl- oder Alkinylrest;
   einen optional substituierten cycloaliphatischen Rest, Arylrest oder Aralkylrest; oder
   einen optional substituierten heteroalicyclischen Rest oder Heteroarylrest;
   jedes R^{d} unabhängig voneinander steht für
   einen optional substituierten Alkyl-, Alkenyl- oder Alkinylrest;
   einen optional substituierten cycloaliphatischen Rest, Arylrest oder Aralkylrest; oder
   einen optional substituierten heteroalicyclischen Rest oder Heteroarylrest;
   jedes R^{e} unabhängig voneinander steht für
   Kohlenstoff;
   einen optional substituierten cycloaliphatischen Rest, Arylrest oder Aralkylrest; oder
   einen optional substituierten heteroalicyclischen Rest oder Heteroarylrest;
   und n eine ganze Zahl von 1 bis 10 ist,
(b2) einem Hydroxycarbonsäureamidrest mit der Formel (II): 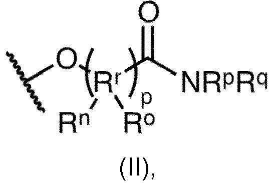 wobei
   jedes Rⁿ, R^{o}, R^{p} und R^{q} jeweils unabhängig voneinander steht für Wasserstoff;
   einen optional substituierten Alkyl-, Alkenyl- oder Alkinylrest;
   einen optional substituierten cycloaliphatischen Rest, Arylrest oder Aralkylrest; oder
   einen optional substituierten heteroalicyclischen Rest oder Heteroarylrest;
   R^{r} unabhängig voneinander steht für
   Kohlenstoff;
   einen optional substituierten cycloaliphatischen Rest, Arylrest oder Aralkylrest; oder
   einen optional substituierten heteroalicyclischen Rest oder Heteroarylrest;
   und p eine ganze Zahl von 1 bis 10 ist,
(b3) einem Carbonsäurerest -O-C(O)-R^{f},
(b4) einem Oximrest -O-N=CR^{g}R^{h}, und
(b5) einem Carbonsäureamidrest -N(Rⁱ)-C(O)-R^{j},
worin
jedes R^{f}, R^{g}, R^{h}, Rⁱ und R^{j} jeweils unabhängig voneinander steht für
Wasserstoff;
einen optional substituierten Alkyl-, Alkenyl- oder Alkinylrest;
einen optional substituierten cycloaliphatischen Rest, Arylrest oder Aralkylrest; oder
einen optional substituierten heteroalicyclischen Rest oder Heteroarylrest;
(c) ein heterocyclisches Azasilan, worin N und Si Ringatome sind und direkt miteinander verknüpft sind und
(d) eine Organophosphonsäure der Formel R-PO(OH)₂, worin R für
einen optional substituierten Alkyl-, Alkenyl- oder Alkinylrest,
einen optional substituierten cycloaliphatischen Rest, Arylrest oder Aralkylrest, oder
einen optional substituierten heteroalicyclischen Rest oder Heteroarylrest steht.

Überraschenderweise weist diese Zusammensetzung eine verbesserte Lagerstabilität und verbesserte Haftung auf verschiedenen Kunststoffen auf, wobei andere wesentliche Eigenschaften härtbarer Zusammensetzungen nicht negativ beeinflusst werden, insbesondere die Durchhärtung, die Klebfreizeit, die vollständige Aushärtung, das transparente Aussehen, die Shore-Härte A und die Haftung auf verschiedenen anderen Untergründen.

Das heterocyclische Azasilan in der erfindungsgemäßen härtbaren Zusammensetzung hat gegenüber herkömmlichen Aminosilanen in entsprechenden Silikonkautschukmassen den Vorteil, dass es erst in Gegenwart von Luftfeuchtigkeit, d. h. erst beim Vernetzen der härtbaren Zusammensetzung, eine Ringöffnung eingeht und so das reaktive Aminosilan liefert. Auf diese Weise werden Reaktionen von Aminosilanen mit dem Vernetzer und weiteren Komponenten der härtbaren Zusammensetzung vermieden, bevor sie der Luftfeuchtigkeit ausgesetzt werden. Dies erhöht die Lagerstabilität. Überraschenderweise wurde gefunden, dass die Kombination aus einem heterocyclischen Azasilan und einer Organophosphonsäure, insbesondere einer Alkylphosphonsäure, zu einer weiteren wesentlichen Verbesserung der Lagerstabilität führt. Das ist überraschenderweise insbesondere beim Einsatz von Vernetzern der Fall, die zum Beispiel Hydroxycarbonsäureesterreste oder Hydroxycarbonsäureamidreste enthalten, und für diese Vernetzer ist es besonders relevant, da diese reaktive Austrittsgruppen enthalten (insbesondere reaktiver als Alkoxysilane, die Alkoxygruppen als Austrittsgruppen enthalten) und solche Vernetzer aufgrund der reaktiven Austrittsgruppen grundsätzlich zu einer niedrigen Lagerstabilität führen.

Unter "Vernetzern" oder "Härtern" werden im Sinne der Erfindung insbesondere vernetzungsfähige Silanverbindungen, verstanden, die mindestens zwei durch Hydrolyse abspaltbare Gruppen aufweisen. Beispiele für derartige vernetzungsfähige Silanverbindungen sind Si(OCH₃)₄, Si(CH₃)(OCH₃)₃ und Si(CH₃)(C₂H₅)(OCH₃)₂. Vernetzer können auch als Härter bezeichnet werden. "Vernetzer" umfasst insbesondere auch "Vernetzersysteme", die mehr als eine vernetzungsfähige Silanverbindung enthalten können.

"Dichtungsmittel", "Dichtstoffe" oder "Dichtungsmassen" bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien.

Die Bezeichnung "Klebstoff" bezieht sich auf Stoffe, die Fügeteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

"Beschichtungsmittel" sind alle Mittel zum Beschichten einer Oberfläche.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

Unter der Bezeichnung "Alkylgruppe" wird ein gesättigter Kohlenwasserstoffrest verstanden. Alkylgruppen weisen insbesondere die Formel -CₙH₂ₙ₊₁ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für Alkylgruppen sind Methyl-, Ethyl-, Propyl-, Butyl-, Isopropyl-, iso-Butyl-, sec-Butyl-, tert-Butyl-, n-Pentyl- und Ethylhexyl. Alkylgruppen können insbesondere auch substituiert sein, auch wenn dies nicht explizit angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen die nicht geradkettig sind, in denen also insbesondere die Kohlenwasserstoffkette eine Gabelung aufweist. Beispiele für verzweigte Alkylgruppen sind Isopropyl-, iso-Butyl-, sec-Butyl-, tert-Butyl-, sec-Pentyl-, 3-Pentyl-, 2-Methylbutyl-, iso-Pentyl-, 3-Methylbut-2-yl, 2-Methylbut-2-yl-, Neopentyl-, Ethylhexyl-, und 2-Ethylhexyl.

Unter der Bezeichnung "Alkenylgruppen" werden Kohlenwasserstoffreste verstanden, die mindestens eine Doppelbindung enthalten. Beispielweise weist eine Alkenylgruppe mit einer Doppelbindung insbesondere die Formel -CₙH₂ₙ₋₁ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

Unter der Bezeichnung "Alkinylgruppen" werden Kohlenwasserstoffreste verstanden, die mindestens eine Dreifachbindung enthalten. Beispielweise weist eine Alkinylgruppe mit einer Dreifachbindung die Formel -CₙH₂ₙ₋₃ auf. Alkinylgruppen können auch mehr als eine Dreifachbindung enthalten. Ferner können Doppel- und Dreifachbindungen enthalten sein. Beispiele sind Ethinyl, Propinyl, Butinyl oder Pentinyl. Alkinylgruppen können substituiert oder unsubstituiert sein.

Unter "Arylgruppen" werden mono- oder polycyclische aromatische Reste verstanden. "Aromatisch" bezeichnet cyclische, planare Kohlenwasserstoffe mit konjugiertem, aromatischem π-Elektronensystem. Arylgruppen sind beispielsweise monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht explizit angegeben ist.

Eine aromatische Gruppe kann monocyclisch, bicyclisch, tricyclisch oder polycyclisch sein. Eine aromatische Gruppe kann ferner auch 1 bis 5 Heteroatome ausgewählt aus der Gruppe bestehend aus N**,** O, und S enthalten. Diese Gruppen werden auch als Heteroarylgruppen bezeichnet (siehe unten). Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispiele jeweils die notwendige Anzahl an Wasserstoffatomen entfernt ist, um eine Eingliederung in die entsprechende Strukturformel zu ermöglichen.

Eine "Cycloalkylgruppe" oder ein "cycloaliphatischer Rest" bezeichnet einen mono- oder polycyclischen Kohlenwasserstoffrest, der nicht aromatisch ist. Insbesondere bezeichnet eine Cycloalkylgruppe mit 4 bis 14 C-Atomen einen nicht-aromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppel- oder Dreifachbindung auf, wobei die Cycloalkylgruppe jedoch nicht aromatisch ist. Cycloalkylgruppen können insbesondere auch substituiert sein, auch wenn dies nicht speziell angegeben ist.

Eine "Aralkylgruppe" bezeichnet eine durch eine Arylgruppe substituierte Alkylgruppe. Eine "C5- bis C15-Aralkylgruppe" bezeichnet insbesondere eine Aralkylgruppe mit 5 bis 15 Kohlenstoffatomen, wobei darin sowohl die Kohlenstoffatome der Alkylgruppe als auch der Arylgruppe enthalten sind. Beispiele für Aralkylgruppen sind Benzyl- und Phenylethyl. Aralkylgruppen können insbesondere auch substituiert sein, auch wenn dies nicht spezielle angegeben ist.

Ein "cyclisches Ringsystem" bezeichnet einen Kohlenwasserstoffring, der nicht aromatisch ist. Insbesondere bezeichnet ein cyclisches Ringsystem mit 4 bis 14 C-Atomen ein nicht-aromatisches Kohlenwasserstoffringsystem mit 4 bis 14 Kohlenstoffatomen. Ein cyclisches Ringsystem kann aus einem einzelnen Kohlenwasserstoffring (monocyclisch), aus zwei Kohlenwasserstoffringen (bicyclisch) oder aus drei Kohlenwasserstoffringen (tricyclisch) bestehen. Insbesondere können cyclische Ringsysteme auch 1 bis 5 Heteroatome, bevorzugt ausgewählt aus der Gruppe bestehend aus N, O, und S enthalten.

"Gesättigte cyclische Ringsysteme" sind nicht aromatisch und weisen auch keine Doppel- oder Dreifachbindungen auf. Beispiele für gesättigte cyclische Ringsysteme sind Cyclopentan, Cyclohexan, Decalin, Norbornan und 4H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HO-R*-CH_{3,} wobei R* ein cyclisches Ringsystem mit 6 Kohlenstoffatomen, insbesondere Cyclohexan, ist, zwei Wasserstoffatome von dem cyclischen Ringsystem, insbesondere von Cyclohexan, entfernt sein, um eine Eingliederung in die Strukturformel zu erlauben.

Eine "Heteroaryl"-Gruppe, wie hierin verwendet, bezeichnet einen monocyclischen oder polycyclischen aromatischen Ring, aus insbesondere 5 bis 10 Ringatomen, wobei ein, zwei, drei oder vier Ringatome Stickstoff, Sauerstoff oder Schwefel sind und der Rest Kohlenstoff ist. Heteroarylgruppen können substituiert oder unsubstituiert sein. Wenn sie substituiert sind, sind die Substituenten wie oben für Cycloalkyl definiert.

Ein "heteroalicyclischer Rest" oder eine "Heterocycloalkylgruppe", wie hierin verwendet, bezeichnet einen monocyclischen oder fusionierten Ring aus 5 bis 10 Ringatomen, der ein, zwei oder drei Heteroatome enthält, die aus N, O und S ausgewählt werden, wobei der Rest der Ringatome Kohlenstoff ist. Eine "Heterocycloalkenyl"-Gruppe enthält zusätzlich ein oder mehrere Doppelbindungen. Der Ring hat jedoch kein vollständiges konjugiertes π-Elektronensystem. Wenn sie substituiert sind, sind die Substituenten wie oben für Cycloalkyl definiert.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel und Si insbesondere Silizium, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1- bis C4-Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette verbunden ist.

Unter einem heteroyclischen Azasilan wird im Sinne der Erfindung eine cyclische organische Verbindung verstanden, die ein Silziumatom und ein Stickstoffatom jeweils als Ringatome enthält. Es kann sich insbesondere um 3- bis 12-gliedrige Ringe handlen, bevorzugt um 5- oder 6-gliedrige Ringe, besonders bevorzugt um 5-gliedrige Ringe. Im heterocyclischen Azasilan der Erfindung sind Si und N direkt miteinander verknüpft. Solche cyclischen oder heterocyclischen Azasilane werden auch als heterocyclische Aminosilane bezeichnet, obgleich sie gerade keine Aminosilane sind, denn erst durch Reaktion mit Wasser entstehen durch Ringöffnung aus den heterocyclischen Azasilanen mit benachbarten Si- und N-Atomen die entsprechenden Aminosilane.

Der Begriff "Polysiloxan" oder "Polyorganosiloxan" bezeichnet eine Organosilikonverbindung. Ein in der Zusammensetzung enthaltenes Polyorganosiloxan ist ein α,ω-dihydroxyl-terminiertes Polyorganosiloxan. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliziumatom, als auch Copolymere aus Monomeren mit verschiedenen organischen Substituenten an einem Siliziumatom umfasst sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder es werden α,ω-dihydroxyl-terminierte Polydiorganosiloxane mit durch hydroxyl- und/oder aminogruppensubstituierten organischen Substituenten an den Siliziumatomen, verwendet.

Bevorzugte Beispiele für eine Organosilikonverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt. Es können auch Mischungen aus Polydiorganosiloxanen mit unterschiedlichen Viskositäten verwendet werden.

Der Begriff "Dichtstoff" oder "Dichtmittel" wie hierhin verwendet beschreibt eine ausgehärtete erfindungsgemäße Zusammensetzung.

Im Sinne der Erfindung handelt es sich bei "Silikonkautschukmassen" um synthetische silikonhaltige Kautschukmassen, die im Rahmen dieser Erfindung auch austauschbar als härtbare Silikonzusammensetzungen bezeichnet werden, was Kautschuk Polymerisate, Polykondensate, und Polyaddukte einschließt, die durch Vernetzung mit geeigneten Vernetzern in den hochelastischen, gehärteten Zustand überführt werden können. Ferner handelt es sich um plastisch formbare Mischungen, beispielsweise aus α,ω-Dihydroxypolyorganosiloxanen und geeigneten Härtern bzw. Vernetzungsmitteln, die unter Feuchtigkeitsausschluß aufbewahrt werden können, wobei diese Silikonkautschukmassen aber unter dem Einfluss von Wasser oder Luftfeuchtigkeit bei Raumtemperatur polymerisieren.

Die Bezeichnung "Katalysator" bezeichnet einen Stoff, der die Aktivierungsenergie einer bestimmten Reaktion herabsetzt und dadurch die Reaktionsgeschwindigkeit erhöht.

Die Zusammensetzung kann die Verbindung mit der Formel HO-(SiR^{l}R^{m}O)ₒ-H und den Vernetzer mit der Formel Si(R)ₘ(R^{a})₄₋ₘ in Form eines Prepolymers enthalten. Bei dem Prepolymer handelt es sich um ein Umsetzungsprodukt der beiden Bestandteile. Diese Umsetzungen sind bekannt und werden auch als Endcapping bezeichnet, wie beispielsweise in der WO 2016/146648 A1 beschrieben.

Die "Reißfestigkeit" gehört zu den durch verschiedene Prüfmethoden bestimmbaren mechanischen Eigenschaften von Polymeren. Die "Reißfestigkeit" lässt sich über die Zugspannung im Augenblick des Reißens des Prüfkörpers im Zugversuch bestimmen.

Die "Reißdehnung" ist das Verhältnis der Längenänderung zur Ausgangslänge nach dem Bruch des Prüfkörpers. Sie drückt die Fähigkeit eines Werkstoffes aus, Formänderungen ohne Rissbildung zu widerstehen. Die Reißdehnung wird nach der DIN EN ISO 8339 und DIN 53504 im Zugversuch ermittelt.

Der "Dehnspannungswert" definiert die Spannung, die bei 100% Dehnung des Dichtstoffes auf die Haftflächen bzw. den angrenzenden Baustoff ausgeübt wird.

Der "Sekantenmodul" bezeichnet das Verhältnis von Spannung zur Dehnung an einem beliebigen Punkt der Kurve eines Spannungs-Dehnungsdiagramms. Es ist die Steigung einer Kurve vom Beginn bis zu einem beliebigen Punkt auf der Spannungs-Dehnungskurve.

Das "Rückstellvermögen" beschreibt die Tendenz eines flexiblen Trägers, die ursprünglichen Maße ganz oder teilweise wieder anzunehmen, nachdem die Kräfte aufgehoben wurden, welche die Ausdehnung oder Verformung verursacht haben. Das mittlere Rückstellvermögen wird gemäß der DIN EN ISO 7389 bestimmt.

In einer bevorzugten Ausführungsform der Erfindung umfasst die härtbare Zusammensetzung
(a) mindestens eine Verbindung der Formel HO-(SiR^{l}R^{m}O)ₒ-H, wobei R^{l} und R^{m} wie oben definiert sind und o eine ganze Zahl von 5 bis 5000 ist,
(b) mindestens einen Vernetzer mit der Formel Si(R)ₘ(R^{a})₄₋ₘ, wobei
   jedes R unabhängig voneinander eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe, bedeutet,
   m eine ganze Zahl von 0 bis 2 ist,
   jedes R^{a} unabhängig voneinander ausgewählt ist aus der Gruppe bestehend aus
      - einem Hydroxycarbonsäureesterrest mit der Formel (I): 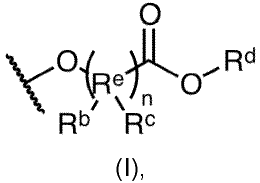 wobei
         jedes R^{b} unabhängig voneinander H oder eine optional substituierte, geradkettige oder verzweigte C1- bis C16-Alkylgruppe oder eine optional substituierte C4- bis C14-Arylgruppe, bedeutet,
         jedes R^{c} unabhängig voneinander H oder eine optional substituierte, geradkettige oder verzweigte C1- bis C16-Alkylgruppe oder eine optional substituierte C4- bis C14-Arylgruppe, bedeutet,
         R^{d} eine optional substituierte, geradkettige oder verzweigte C1- bis C16-Alkylgruppe, eine optional substituierte, geradkettige oder verzweigte C2- bis C16-Alkenyl- oder Alkinylgruppe, eine optional substituierte C4- bis C14-Cycloalkyl- oder Cycloalkenylgruppe, eine optional substituierte C5- bis C15-Aralkylgruppe oder eine optional substituierte C4- bis C14-Arylgruppe, bedeutet,
         R^{e} C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
         n eine ganze Zahl von 1 bis 10 ist,
      - einem Hydroxycarbonsäureamidrest mit der Formel (II): 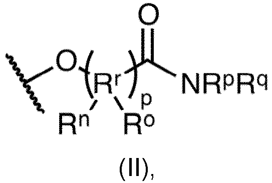 wobei
         jedes Rⁿ unabhängig voneinander H oder eine optional substituierte, geradkettige oder verzweigte C1- bis C16-Alkylgruppe oder eine optional substituierte C4- bis C14-Arylgruppe, bedeutet,
         jedes R^{o} unabhängig voneinander H oder eine optional substituierte, geradkettige oder verzweigte C1- bis C16-Alkylgruppe oder eine optional substituierte C4- bis C14-Arylgruppe, bedeutet,
         R^{p} und R^{q} unabhängig voneinander H oder eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
         R^{r} C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
         p eine ganze Zahl von 1 bis 10 ist,
      - einem Carbonsäurerest -O-C(O)-R^{f}, wobei R^{f} H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,
      - einem Oximrest -O-N=CR^{g}R^{h}, wobei R^{g} und R^{h} unabhängig voneinander H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten, und
      - einem Carbonsäureamidrest -N(Rⁱ)-C(O)-R^{j}, wobei Rⁱ H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,
(c) ein heterocyclisches Azasilan, worin N und Si Ringatome sind und direkt miteinander verknüpft sind, und
(d) eine Organophosphonsäure der Formel R-PO(OH)₂, worin
   R für
   einen optional substituierten Alkyl-, Alkenyl- oder Alkinylrest,
   einen optional substituierten cycloaliphatischen Rest, Arylrest oder Aralkylrest, oder
   einen optional substituierten heteroalicyclischen Rest oder Heteroarylrest steht.

Die Menge an Organophosphonsäure, bezogen auf die Gesamtmenge an Vernetzer, beträgt bevorzugt 0,3 - 30 mol-%, besonders bevorzugt 1 - 10 mol-%, weiter bevorzugt 3 - 8 mol-% und am meisten bevorzugt 5 - 7 mol-%.

Das Molverhältnis von Vernetzer zu Organophosphonsäure beträgt vorzugsweise 3 - 350, weiter bevorzugt 5 - 120 und am meisten bevorzugt 10 - 20. Die Menge an Organophosphonsäure, bezogen auf die Gesamtmenge an heterocyclischen Azasilanen, beträgt vorzugsweise 1 - 30 mol-%, weiter bevorzugt 3 - 25 mol-% und am meisten bevorzugt 8 - 18 mol-%.

In der Organophosphonsäure der Formel R-PO(OH)₂, steht
R vorzugsweise für
einen optional substituierten Alkyl-, Alkenyl- oder Alkinylrest jeweils mit 2 - 12 Kohlenstoffatomen,
einen optional substituierten cycloaliphatischen Rest, Arylrest oder Aralkylrest jeweils mit 6 - 12 Kohlenstoffatomen, oder einen optional substituierten heteroalicyclischen Rest oder Heteroarylrest jeweils mit 6 - 12 Kohlenstoffatomen.

Die Organophosphonsäure ist weiter vorzugsweise eine Alkylphosphonsäure, wobei der Alkylrest 2 - 12 Kohlenstoffatome aufweist, vorzugsweise 4 - 10 Kohlenstoffatome, weiter bevorzugt 6 - 9 Kohlenstoffatome und am meisten bevorzugt 8 Kohlenstoffatome. Der Alkylrest kann substituiert oder unsubstituiert sein, bevorzugt unsubstituiert, und/oder er kann verzweigt oder unverzweigt sein, vorzugsweise ist er unverzweigt. Die Organophosphonsäure ist am meisten bevorzugt Octylphosphonsäure, insbesondere n-Octylphosphonsäure.

Die Verbindung der Formel HO-(SiR^{l}R^{m}O)ₒ-H ist eine Silikonverbindung, auch als Polyorganosiloxan bezeichnet, worin
jedes R^{l} und R^{m} unabhängig voneinander steht für
einen optional substituierten Alkyl-, Alkenyl- oder Alkinylrest;
einen optional substituierten cycloaliphatischen Rest, Arylrest oder Aralkylrest; oder
einen optional substituierten heteroalicyclischen Rest oder Heteroarylrest;
und o eine ganze Zahl von 5 bis 5000 ist.

In einer bevorzugten Ausführungsform steht jedes R^{l} und R^{m} unabhängig voneinander für eine optional substituierte, geradkettige oder verzweigte C1- bis C16-Alkylgruppe, eine optional substituierte, geradkettige oder verzweigte C2- bis C16-Alkenylgruppe oder eine optional substituierte C4- bis C14-Arylgruppe.

In einer weiteren bevorzugten Ausführungsform ist in dem Polyorganosiloxan HO-(SiR^{l}R^{m}O)ₒ-H o eine ganze Zahl von 5 bis 3500, weiter bevorzugt 10 bis 3500, noch weiter bevorzugt von 100 bis 3000, insbesondere von 800 bis 2000, am meisten bevorzugt von 1000 bis 1800, ist.

In einer weiteren Ausführungsform hat das Polyorganosiloxan HO-(SiR^{l}R^{m}O)ₒ-H ein gewichtsmittleres Molekulargewicht M_{w} von 400 bis 5.000.000, insbesondere von 3.000 bis 2.500.000, von 15.000 bis 1.000.000, von 30.000 bis 750.000, von 50.000 bis 500.000 oder von 110.000 bis 150.000.

Ferner betrifft die Zusammensetzung ein Polyorganosiloxane HO-(SiR^{l}R^{m}O)ₒ-H, die bei 25°C eine kinematische Viskosität von 20 bis 500000 cSt aufweisen.

In einer bevorzugten Ausführungsform weist das ein Polyorganosiloxan HO-(SiR^{l}R^{m}O)ₒ-H bei 25°C eine kinematische Viskosität von 20 bis 350000 cSt oder von 20000 bis 100000 cSt oder von 20000 bis 90000 cSt oder von 20000 bis 80000 cSt auf.

In einer weiteren bevorzugten Ausführungsform enthält die Zusammensetzung Polyorganosiloxane HO-(SiR^{l}R^{m}O)ₒ-H, wobei R^{l} und R^{m} unabhängig voneinander eine optional substituierte, geradkettige oder verzweigte C1- bis C16-Alkylgruppe, insbesondere eine optional substituierte, geradkettige oder verzweigte C1- bis C12- oder C1- bis C8-Alkylgruppe, eine optional substituierte, geradkettige oder verzweigte C2- bis C16-Alkenylgruppe, insbesondere eine optional substituierte, geradkettige oder verzweigte C2- bis C12- oder C2- bis C8-Alkenylgruppe, oder eine optional substituierte C4- bis C14-Arylgruppe, insbesondere eine optional substituierte C4-bis C10-Arylgruppe, bedeuten.

In einer besonders bevorzugten Ausführungsform enthält die erfindungsgemäße Zusammensetzung ein Polyorganosiloxan HO-(SiR^{l}R^{m}O)ₒ-H, wobei R^{l} und R^{m} unabhängig voneinander ausgewählt sind aus der Gruppe bestehend aus Methyl-, Ethyl-, Propyl-, Butyl-, Trifluormethyl-, Vinyl-, Allyl-, Butenyl-, Phenyl- und Naphthyl-.

In einer besonders bevorzugten Ausführungsform enthält die erfindungsgemäße Zusammensetzung ein Polyorganosiloxan HO-(SiR^{l}R^{m}O)ₒ-H, wobei das Polyorganosiloxan α,ω-Dihydroxy-dimethyl-polysiloxan ist.

Ferner enthält die erfindungsgemäße Zusammensetzung Vernetzer der Formel Si(R)ₘ(R^{a})₄₋ₘ wobei jedes R^{a} unabhängig voneinander ausgewählt aus der Gruppe bestehend aus:
- einem Hydroxycarbonsäureesterrest mit der Formel (I): 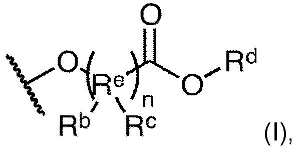
- einem Hydroxycarbonsäureamidrest mit der Formel (II): 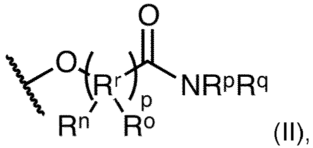
- einem Carbonsäurerest -O-C(O)-R^{f},
- einem Oximrest -O-N=CR^{g}R^{h},
- einem Carbonsäureamidrest -N(Rⁱ)-C(O)-R^{j},

In einer bevorzugten Ausführungsform weist der Vernetzer Reste R der Formel Si(R)ₘ(R^{a})₄₋ₘ auf, wobei jeder Rest R unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe, oder eine optional substituierte C4- bis C10-Arylgruppe bedeutet.

In einer besonders bevorzugten Ausführungsform ist jeder Rest R des Vernetzers der Formel Si(R)ₘ(R^{a})₄₋ₘ unabhängig voneinander ein Methyl-, Ethyl-, Propyl-, Vinyl-, Phenyl- oder ein Allylrest.

In einer bevorzugten Ausführungsform weist die erfindungsgemäße Zusammensetzung Vernetzter der Formel Si(R)ₘ(R^{a})₄₋ₘ wobei jedes R^{a} unabhängig voneinander ausgewählt aus der Gruppe bestehend aus:
- einem Hydroxycarbonsäureesterrest mit der Formel (I): 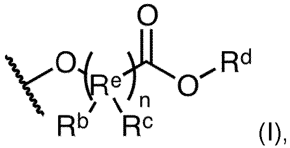
- einem Hydroxycarbonsäureamidrest mit der Formel (II): 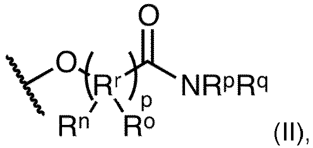
- einem Carbonsäurerest -O-C(O)-R^{f},
- einem Oximrest -O-N=CR^{g}R^{h},
- einem Carbonsäureamidrest -N(Rⁱ)-C(O)-R^{j},
wobei
jedes R^{b} unabhängig voneinander H oder eine optional substituierte, geradkettige oder verzweigte C1- bis C16-Alkylgruppe oder eine optional substituierte C4- bis C14-Arylgruppe, bedeutet,
jedes R^{c} unabhängig voneinander H oder eine optional substituierte, geradkettige oder verzweigte C1- bis C16-Alkylgruppe oder eine optional substituierte C4- bis C14-Arylgruppe, bedeutet,
R^{d} eine optional substituierte, geradkettige oder verzweigte C1- bis C16-Alkylgruppe, eine optional substituierte, geradkettige oder verzweigte C2- bis C16-Alkenyl- oder Alkinylgruppe, eine optional substituierte C4- bis C14-Cycloalkyl- oder Cycloalkenylgruppe, eine optional substituierte C5- bis C15-Aralkylgruppe oder eine optional substituierte C4- bis C14-Arylgruppe, bedeutet,
R^{e} C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
n eine ganze Zahl von 1 bis 10 ist;
wobei
jedes Rⁿ unabhängig voneinander H oder eine optional substituierte, geradkettige oder verzweigte C1- bis C16-Alkylgruppe oder eine optional substituierte C4- bis C14-Arylgruppe, bedeutet,
jedes R° unabhängig voneinander H oder eine optional substituierte, geradkettige oder verzweigte C1- bis C16-Alkylgruppe oder eine optional substituierte C4- bis C14-Arylgruppe, bedeutet,
R^{p} und R^{q} unabhängig voneinander H oder eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
R^{r} C oder ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
p eine ganze Zahl von 1 bis 10 ist;
wobei
R^{f} H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet;
wobei
R^{g} und R^{h} unabhängig voneinander H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten;
und wobei
Rⁱ H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

In einer bevorzugten Ausführungsform der Erfindung weist der Vernetzer Reste R auf, wobei jedes R unabhängig voneinander eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte, geradkettige oder verzweigte C2- bis C12-Alkenylgruppe, insbesondere eine optional substituierte, geradkettige oder verzweigte C2- bis C8-Alkenylgruppe, oder eine optional substituierte C4- bis C10-Arylgruppe bedeutet.

In einer besonders bevorzugten Ausführungsform ist jeder Rest R des Vernetzers der Formel Si(R)ₘ(R^{a})₄₋ₘ unabhängig voneinander ein Methyl-, Ethyl-, Propyl-, Vinyl-, Phenyl- oder ein Allylrest. Im Hydroxycarbonsäureesterrest des Vernetzers ist jeder R^{b} und R^{c} vorzugsweise unabhängig voneinander eine optional substituierte, geradkettige oder verzweigte C1- bis C12-Alkylgruppe, insbesondere eine optional substituierte, geradkettige oder verzweigte C1- bis C8-Alkylgruppe. Die Zahl n ist vorzugsweise eine ganze Zahl von 1 bis 5, insbesondere von 1 bis 3, besonders bevorzugt ist n = 1.

In einer bevorzugten Ausführungsform der Erfindung ist im Hydroxycarbonsäureesterrest des Vernetzers jedes R^{b} und R^{c} unabhängig voneinander ausgewählt ist aus der Gruppe bestehend aus H, Methyl-, Ethyl-, Propyl-, Isopropyl-, Butyl-, n-Butyl-, sec-Butyl-, iso-Butyl- und tert-Butyl-, insbesondere aus der Gruppe bestehend aus H und Methyl.

Im Hydroxycarbonsäureesterrest des Vernetzters ist R^{d} vorzugsweise eine optional substituierte, geradkettige oder verzweigte C1- bis C12-Alkylgruppe, insbesondere eine optional substituierte, geradkettige oder verzweigte C1- bis C8-Alkylgruppe, eine optional substituierte, geradkettige oder verzweigte C2- bis C12-Alkenyl- oder Alkinylgruppe, insbesondere eine optional substituierte, geradkettige oder verzweigte C2- bis C18-Alkenylgruppe, eine C4- bis C10-Cycloalkylgruppe, eine C5-bis C11-Aralkylgruppe oder eine C4- bis C10-Arylgruppe.

In einer weiter bevorzugten Ausführungsform der Erfindung ist im Hydroxycarbonsäureesterrest des Vernetzers R^{d} ausgewählt aus der Gruppe bestehend aus Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, 2-Ethylhexyl- und Vinyl-. Besonders bevorzugt sind Methyl-, Ethyl- und Vinyl-.

In einer bevorzugten Ausführungsform ist im Hydroxycarbonsäureesterrest des Vernetzers R^{e} ein divalenter Benzolrest oder R^{e} C und R^{b} und R^{c} H oder R^{e} C und R^{b} H und R^{c} Methyl-.

In einer besonders bevorzugten Ausführungsform ist R^{a} des Vernetzers ein Hydroxycarbonsäureresterrest und n eine ganze Zahl von 1 bis 5, besonders bevorzugt ist n = 1 bis 3, insbesondere 1. Besonders bevorzugt ist der Vernetzer Methyl-tris(ethyllaktato)silan und/oder Tetra(ethyllaktato)silan.

In einer Ausführungsform ist in der erfindungsgemäßen Zusammensetzung im Hydroxycarbonsäureamidrest des Vernetzers jedes Rⁿ und R^{o} unabhängig voneinander H oder eine optional substituierte, geradkettige oder verzweigte C1- bis C12-Alkylgruppe, insbesondere eine optional substituierte, geradkettige oder verzweigte C1-bis C8-Alkylgruppe.

Im Hydroxycarbonsäureamidrest des Vernetzers jedes Rⁿ und R^{o} vorzugsweise unabhängig voneinander ausgewählt aus der Gruppe bestehend aus H, Methyl-, Ethyl-, Propyl-, Isopropyl-, Butyl-, n-Butyl-, sec-Butyl-, iso-Butyl- und tert-Butyl-, insbesondere aus der Gruppe bestehend aus H und Methyl.

In einer weiteren Ausführungsform sind im Hydroxycarbonsäureamidrest des Vernetzers R^{p} und R^{q} unabhängig voneinander H oder eine optional substituierte, geradkettige oder verzweigte C1- bis C12-Alkylgruppe, insbesondere eine optional substituierte, geradkettige oder verzweigte C1- bis C8-Alkylgruppe, oder eine optional substituierte C4- bis C14-Cycloalkylgruppe oder eine C5- bis C11-Aralkylgruppe oder eine C4- bis C10- Arylgruppe.

In einer bevorzugten Ausführungsform sind im Hydroxycarbonsäureamidrest des Vernetzers R^{p} und R^{q} unabhängig voneinander ausgewählt aus der Gruppe bestehend aus H, Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-.

In einer Ausführungsform ist im Hydroxycarbonsäureamidrest des Vernetzers R^{r} ein divalenter Benzolrest oder R^{r} C und Rⁿ und R^{o} H oder R^{r} C und Rⁿ H und R^{o} Methyl-.

In einer weiteren bevorzugten Ausführungsform ist im Hydroxycarbonsäureamidrest des Vernetzers p eine ganze Zahl von 1 bis 5, insbesondere von 1 bis 3, besonders bevorzugt ist p = 1.

Im Carbonsäurerest des Vernetzers der erfindungsgemäßen Zusammensetzung ist R^{f} vorzugsweise H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1- bis C8-Alkylgruppe, eine optional substituierte C4-bis C8-Cycloalkylgruppe oder eine optional substituierte C4- bis C10-Arylgruppe oder eine optional substituierte C5- bis C11-Aralkylgruppe.

In einer bevorzugten Ausführungsform ist im Carbonsäurerest des Vernetzers R^{f} ausgewählt ist aus der Gruppe bestehend aus H**,** Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-. In einer besonders bevorzugten Ausführungsform ist der Vernetzer mit Carbonsäurerest Ethyltriacetoxysilan und/oder Methyltriacetoxysilan und/oder Propyltriacetoxysilan.

In einer weiteren bevorzugten Ausführungsform sind im Oximrest des Vernetzers gemäß der Erfindung R^{g} und R^{h} unabhängig voneinander H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1- bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe.

In einer bevorzugten Ausführungsform sind im Oximrest der Vernetzers R^{g} und R^{h} unabhängig voneinander ausgewählt sind aus der Gruppe bestehend aus H, Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-. In einer besonders bevorzugten Ausführungsform handelt es sich bei dem Vernetzer mit Oximrest um Methyl-tris(2-pentanonoximo)silan, Vinyl-tris(2-pentanonoximo)silan und/oder Tetra(2-pentanonoximo)silan.

In einer weiter bevorzugten Ausführungsform der Erfindung sind im Carbonsäureamidrest des Vernetzers gemäß der Erfindung Rⁱ und R^{j} unabhängig voneinander H oder eine optional substituierte, geradkettige oder verzweigte C1- bis C12-Alkylgruppe, eine optional substituierte C4- bis C10-Cycloalkylgruppe oder eine optional substituierte C4- bis C10-Arylgruppe oder eine optional substituierte C5- bis C11-Aralkylgruppe, insbesondere H oder eine optional substituierte, geradkettige oder verzweigte C1- bis C8-Alkylgruppe, eine optional substituierte C4- bis C8-Cycloalkylgruppe oder eine optional substituierte C4- bis C10-Arylgruppe oder eine optional substituierte C5- bis C11-Aralkylgruppe.

Im Carbonsäureamidrest des Vernetzers sind Rⁱ und R^{j} vorzugsweise unabhängig voneinander ausgewählt aus der Gruppe bestehend aus H, Phenyl-, Tolyl-, Naphthyl-, Benzyl-, Cyclohexyl-, Methyl-, Ethyl-, Propyl-, Isopropyl-, Butyl-, n-Butyl-, sec-Butyl-, iso-Butyl-, tert-Butyl-, Pentyl-, n-Pentyl-, sec-Pentyl-, 3-Pentyl-, 2-Methylbutyl-, iso-Pentyl-, 3-Methylbut-2-yl-, 2-Methylbut-2-yl-, Neopentyl-, Hexyl-, Heptyl-, Octyl-, Ethylhexyl-, und 2-Ethylhexyl-. In einer besonders bevorzugten Ausführungsform ist der Vernetzer mit Carbonsäureamidrest Methylethoxy-bis(N-Methyl-benzamido)silan.

In einer weiteren besonders bevorzugten Ausführungsform werden Mischungen der beschriebenen Vernetzer für die erfindungsgemäßen härtbaren Zusammensetzungen verwendet. In einer weiteren besonders bevorzugten Ausführungsform trägt der Vernetzer verschiedene wie oben beschriebene Reste R^{a}.

Ferner enthält die erfindungsgemäße Zusammensetzung ein heterocyclisches Azasilan, das in der Zusammensetzung unter anderem als Haftvermittler fungieren kann. Es kann auch eine Mischung aus mehreren heterocyclischen Azasilanen eingesetzt werden.

In einer bevorzugten Ausführungsform ist das heterocyclische Azasilan eine Verbindung der Formel 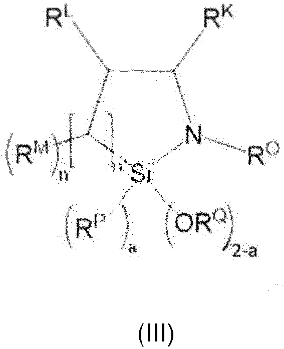 wobei
a = 0,1 oder 2 ist;
n = 0 - 6 ist;
jedes R^{K}, R^{L}, R^{M}, R^{O}, R^{P} und R^{Q} unabhängig voneinander H oder eine optional substituierte, geradkettige oder verzweigte C1- bis C20-Alkylgruppe, eine optional substituierte, geradkettige oder verzweigte C2- bis C20-Alkenylgruppe, eine optional substituierte C3- bis C20-Cycloalkylgruppe, eine optional substituierte C4- bis C20-Cycloalkenylgruppe, eine optional substituierte, geradkettige, verzweigte oder cyclische C4- bis C20-Alkinylgruppe oder eine optional substituierte, geradkettige oder verzweigte C2- bis C20-Heteroalkylgruppe, eine optional substituierte, geradkettige, verzweigte oder cyclische C3- bis C20-Heteroalkenylgruppe oder eine optional substituierte C4- bis C14-Aryl- oder Heteroarylgruppe bedeutet oder zwei Reste R^{K}, R^{L}, R^{M}, R^{O}, R^{P} und R^{Q} zusammen einen 5- bis 8-gliedrigen Ring ausbilden.

Der Parameter a in (R^{P})ₐ und (OR^{Q})₂₋ₐ gibt ein Verhältnis von Alkoxyresten OR^{Q} zu Resten R^{P} wieder, die wie hierin definiert sind. Dabei kann a Werte von 0 bis 2 annehmen. Ist a = 0 enthält das zugehörige heterocyclische Organosilan keinen Rest R^{P} und zwei OR^{Q} Reste. Der Parameter a kann auch 1 sein. In diesem Fall ist ein R^{P} Rest und ein OR^{Q} Rest direkt an das Siliziumatom des heterocyclischen Organosilans gebunden. Bei a = 2 sind wiederum ausschließlich R^{P} Reste und keine OR^{Q} Reste mit dem Siliziumatom verknüpft.

Die Reste (R^{M})ₙ in der Formel (III) stehen jeweils in direktem Zusammenhang mit der Ringgröße, die durch den Parameter n bestimmt wird. Die mögliche Anzahl der Reste an den Ringatomen wird hier auch durch den Wert n angepasst. Liegt beispielsweise ein 6 Ring vor ist n = 2 und die Anzahl der Reste R^{c} oder R^{C} wird entsprechend auf 2 angepasst. So kann jedes Ringatom einen Rest tragen.

Das heterocyclische Azasilan kann an jedem Ringatom unterschiedliche Reste tragen, jedes R^{K}, R^{L}, R^{M}, R^{O}, R^{P} und R^{Q} aus der Formel (III) ist dabei unabhängig voneinander H oder eine optional substituierte, geradkettige oder verzweigte C1-bis C20-Alkylgruppe, eine optional substituierte, geradkettige oder verzweigte C2-bis C20 Alkenylgruppe, eine optional substituierte C3- bis C20 Cycloalkylgruppe, eine optional substituierte C4- bis C20 Cycloalkenylgruppe, eine optional substituierte, geradkettige, verzweigte oder cyclische C4- bis C20 Alkinylgruppe oder eine optional substituierte, geradkettige oder verzweigte C2- bis C20 Heteroalkylgruppe, eine optional substituierte, geradkettige, verzweigte oder cyclische C3- bis C20 Heteroalkenylgruppe oder eine optional substituierte C4- bis C14-Aryl- oder Heteroarylgruppe. Bevorzugt bedeutet jedes R^{K}, R^{L}, R^{M}, R^{O}, R^{P} und R^{Q} dabei unabhängig voneinander H, oder eine optional substituierte geradkettige oder verzweigte C1-bis C10 Alkylgruppe, eine optional substituierte geradkettige oder verzweigte C2-bis C10 Alkenylgruppe, eine optional substituierte, geradkettige oder verzweigte C2-bis C10 Heteroalkylgruppe, eine optional substituierte C3- bis C10 Cycloalkylgruppe, oder einer optional substituierte C4- bis C8-Aryl- oder Heteroarylgruppe. Besonders bevorzugt ist jedes R^{K}, R^{L}, R^{M}, R^{O}, R^{P} und R^{Q} unabhängig voneinander H, eine optional substituierte geradkettige oder verzweigte C1- bis C8 Alkylgruppe, eine optional substituierte geradkettige oder verzweigte C2- bis C8 Alkenylgruppe, eine optional substituierte, geradkettige oder verzweigte C4- bis C8 Heteroalkylgruppe, eine optional substituierte C4 bis C6 Cycloalkylgruppe oder eine optional substituierte C5- bis C6 Aryl- oder Heteroarylgruppe.

n ist vorzugsweise 1 - 4, weiter bevorzugt 1 - 2, insbesondere 1.

In einer bevorzugten Ausführungsform der Erfindung hat das heterocyclische Azasilan folgende Strukturformel:

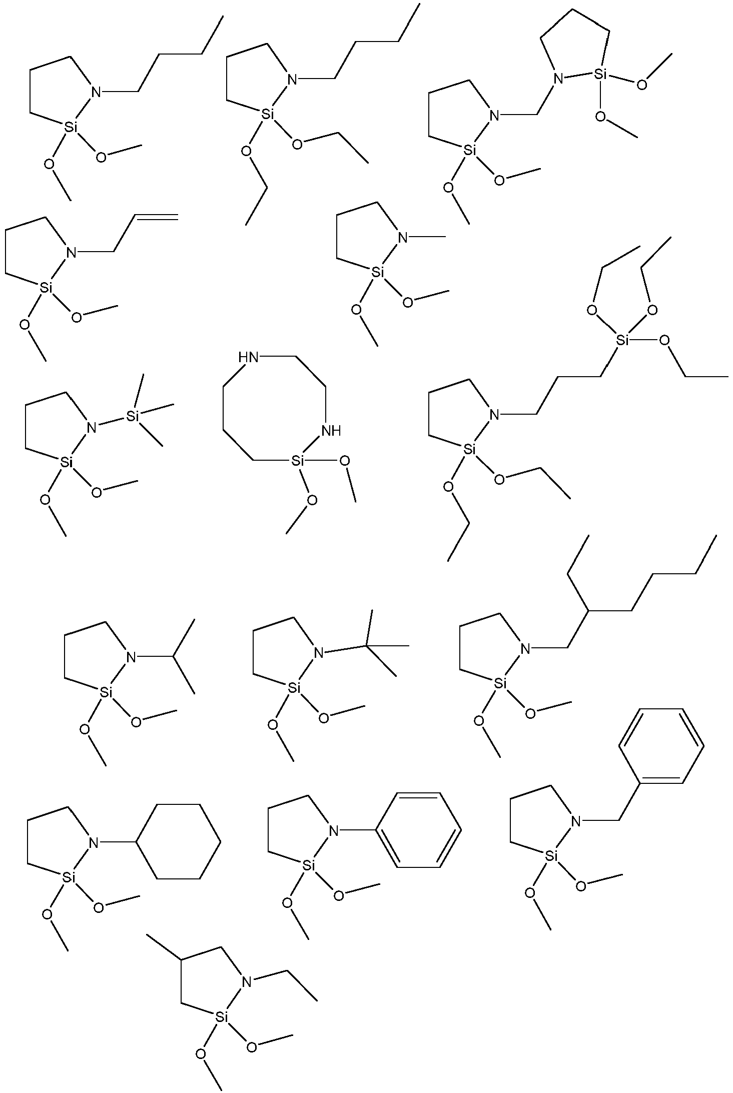

Die erfindungsgemäße Zusammenstzung kann eine oder mehrere der oben gezeigten Verbindungen (heterocyclische Azasilane) enthalten.

Besonders bevorzugte heterocyclische Azasilane sind substituiertes oder unsubstituiertes, insbesondere unsubstituiertes, N-n-Butyl-1-aza-2,2-dimethoxy-2-silacyclopentan ((BDC), CAS-Nr. 618914-44-6), 2,2-Diethoxy-1-(3-triethoxysilyl-propyl)aza-2-silacyclopentan ((TESPDC), CAS-Nr. 1184179-50-7) und/oder 2,2-Diethoxy-1-(trimethylsilyl)aza-2-silacyclopentan ((TMS)DEC), CAS-Nr. 21297-72-3)

In einer bevorzugten Ausführungsform enthält die erfindungsgemäße Zusammensetzung das heterocyclische Azasilan in einer Menge, bezogen auf das Gesamtgewicht der Zusammensetzung von 0,1 - 3 Gew.-%, bevorzugt 0,2 - 2 Gew.-%, besonders bevorzugt 0,3 - 1,5 Gew.-%.

Die erfindungsgemäße Zusammensetzung enthält vorzugsweise zusätzlich einen Metallkatalysator, um das Aushärten der erfindungsgemäßen Zusammensetzung zu beschleunigen. Besonders bevorzugt enthält die erfindungsgemäße Zusammensetzung einen Metallkatalysator, der kein Zinn enthält. Diese Katalysatoren haben den Vorteil, dass toxisches Zinn vermieden wird. Sie lösen die Aufgabe der Erfindung, toxische Bestandteile der Zusammensetzung zu vermeiden, insbesondere toxisches Zinn. Überraschenderweise wurde im Rahmen der Erfindung gefunden, dass eine härtbare Zusammensetzung mit den Vorteilen der erhöhten Lagerstabilität durch die Kombination aus enthaltenem heterocyclischen Azasilan und Organophosphonsäure in Gegenwart von Polyorganosiloxan und Vernetzer auch mit zinnfreien Katalysatoren in der Mischung bereitgestellt werden kann und trotzdem eine schnelle Vernetzung erfolgt, obgleich zinnhaltige Katalysatoren besonders effektive Katalysatoren in diesen Silikonkautschukmassen sind. Auf diese Weise könnten die Vorteile der erhöhten Lagerstabilität mit der geringen Toxizität zinnfreier Katalysatoren kombiniert werden, wobei gleichzeitig die weiteren vorteilhaften Eigenschaften der härtbaren Zusammensetzungen erhalten bleiben.

Bevorzugt ist das Metall des Metallkatalysators ausgewählt aus der Gruppe bestehend aus Na, Zn, Sc, Nd, Ti, Zr, Hf, V, Fe, Pt, Cu, Ga, und Bi, besonders bevorzugt ausgewählt aus der Gruppe bestehend aus Zn, Ti, Zr, Hf, V, Fe und Bi. Am meisten bevorzugt ist das Metall des Metallkatalysators Zr.

In einer bevorzugten Ausführungsform der Erfindung umfasst die Zusammensetzung als Metallkatalysator ein Metallsiloxan, insbesondere ein Metallsiloxan der Formel R*_{A}Si_{B}O_{C}M_{D}, wobei
jedes R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl, -OH und -O-(C1- bis C20-Alkyl), worin
M das Metall ist,
A eine ganze Zahl von 4 bis 19 ist,
B eine ganze Zahl von 4 bis 10 ist,
C eine ganze Zahl von 8 bis 30 ist, und
D eine ganze Zahl von 1 bis 8 ist.

Das Metallsiloxan ist vorzugsweise ein Metallsilsesquioxan, insbesondere ein polyhedrales Metallsilsesquioxan. Unter einem polyhedralen Metallsilsesquioxan wird ein Metallsilsesquioxan verstanden, bei dem Silizium- und Metallatome zumindest teilweise die Ecken eines Polyeders besetzen, beispielsweise eines Würfels.

Besonders bevorzugt ist das Metallsilsesquioxan ein polyhedrales Titan- und/oder-Zirkoniumsilsesquioxan, insbesondere ein Zirkoniumsilsesquioxan.

In einer bevorzugten Ausführungsform weist das Metallsiloxan, vorzugsweise das Metallsilsesquioxan, die folgende Formel (IV) auf 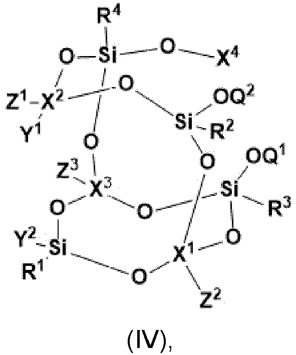
wobei X¹, X² und X³ unabhängig voneinander ausgewählt sind aus Si oder M¹, wobei M¹ ein Metall ist, vorzugsweise kein Zinn, insbesondere ausgewählt aus der Gruppe bestehend aus Na, Zn, Sc, Nd, Ti, Zr, Hf, V, Fe, Pt, Cu, Ga und Bi; insbesondere bevorzugt aus der Gruppe bestehend aus Zn, Ti, Zr, Hf, V, Fe und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M² ein Metall ist, vorzugsweise kein Zinn, weiter vorzugsweise ein Metall ausgewählt aus der Gruppe bestehend aus Na, Zn, Sc, Nd, Ti, Zr, Hf, V, Fe, Pt, Cu, Ga und Bi; insbesondere bevorzugt aus der Gruppe bestehend aus Zn, Ti, Zr, Hf, V, Fe, Bi,
und X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1-bis C6-Alkyl), oder wobei L¹ ausgewählt ist aus der Gruppe bestehend aus -OH, - O-Methyl, -O-Ethyl, -O-Propyl, -O-Butyl, -O-Octyl, -O-Isopropyl, und -O-Isobutyl, und wobei M³ ein Metall ist, vorzugsweise kein Zinn, weiter vorzugsweise ein Metall ausgewählt aus der Gruppe bestehend aus Na, Zn, Sc, Nd, Ti, Zr, Hf, V, Fe, Pt, Cu, Ga und Bi; insbesondere bevorzugt aus der Gruppe bestehend aus Zn, Ti, Zr, Hf, V, Fe, Bi,
   oder
X⁴ -M³L¹ bedeutet und Q² H oder eine Einfachbindung verknüpft mit M³ bedeutet und Q¹ H, M⁴L⁴_{Δ} oder -SiR⁸ bedeutet, wobei M⁴ ein Metall ist, vorzugsweise kein Zinn, weiter vorzugsweise ein Metall ausgewählt aus der Gruppe bestehend aus Na, Zn, Sc, Nd, Ti, Zr, Hf, V, Fe, Pt, Cu, Ga und Bi; insbesondere bevorzugt aus der Gruppe bestehend aus Zn, Ti, Zr, Hf, V, Fe und Bi, und wobei L⁴ ausgewählt ist aus der Gruppe bestehend aus -OH und -O-(C1- bis C10-Alkyl), insbesondere -O-(C1-bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl,
   oder
X⁴, Q¹ und Q² unabhängig voneinander -M³L¹_{Δ} bedeuten,
   oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet,
   oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer besonders bevorzugten Ausführungsform weist das Metallsilsesquioxan die Strukturformel (V) auf 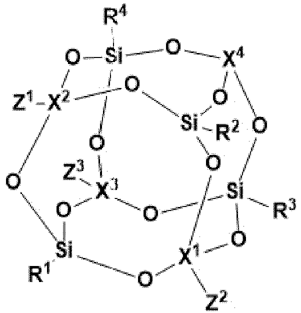 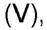
wobei X¹, X² und X³ unabhängig voneinander ausgewählt sind aus Si oder M¹, wobei M¹ ein Metall ist, vorzugsweise kein Zinn, weiter vorzugsweise ein Metall ausgewählt aus der Gruppe bestehend aus Na, Zn, Sc, Nd, Ti, Zr, Hf, V, Fe, Pt, Cu, Ga und Bi; insbesondere bevorzugt aus der Gruppe bestehend aus Zn, Ti, Zr, Hf, V, Fe und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
wobei X⁴ -M³L¹_{Δ} bedeutet, wobei L¹ ausgewählt ist aus der Gruppe bestehend aus -OH und -O-(C1- bis C10-Alkyl), insbesondere -O-(C1- bis C8-Alkyl) oder -O-(C1-bis C6-Alkyl), oder wobei L¹ ausgewählt ist aus der Gruppe bestehend aus -OH, - O-Methyl, -O-Ethyl, -O-Propyl, -O-Butyl, -O-Octyl, -O-Isopropyl, und -O-Isobutyl, und wobei M³ ein Metall ist, vorzugsweise kein Zinn, weiter vorzugsweise ein Metall ausgewählt aus der Gruppe bestehend aus Na, Zn, Sc, Nd, Ti, Zr, Hf, V, Fe, Pt, Cu, Ga und Bi; insbesondere bevorzugt aus der Gruppe bestehend aus Zn, Ti, Zr, Hf, V, Fe und Bi.

In einer weiteren besonders bevorzugten Ausführungsform weist das Metallsilsesquioxan die Formel (VI) auf 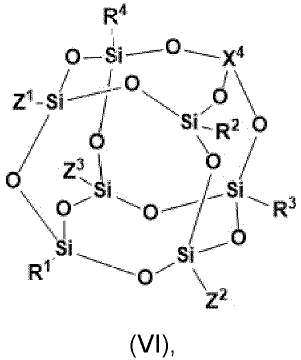
wobei X⁴ -M³L¹_{Δ} bedeutet, wobei L¹ ausgewählt ist aus der Gruppe bestehend aus -OH und -O-(C1- bis C10-Alkyl), insbesondere -O-(C1- bis C8-Alkyl) oder -O-(C1-bis C6-Alkyl), oder wobei L¹ ausgewählt ist aus der Gruppe bestehend aus -OH, - O-Methyl, -O-Ethyl, -O-Propyl, -O-Butyl, -O-Octyl, -O-Isopropyl, und -O-Isobutyl, und wobei M³ ein Metall ist, vorzugsweise kein Zinn, weiter vorzugsweise ein Metall ausgewählt aus der Gruppe bestehend aus Na, Zn, Sc, Nd, Ti, Zr, Hf, V, Fe, Pt, Cu, Ga und Bi; insbesondere bevorzugt aus der Gruppe bestehend aus Zn, Ti, Zr, Hf, V, Fe und Bi,
Z¹, Z² und Z³ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
R¹, R², R³ und R⁴ jeweils unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.

Besonders bevorzugt ist in den obigen Formeln X⁴ = ZrOR oder TiOR, insbesondere ZrOR, mit R = C1- bis C12-Alkyl, insbesondere ZrO-Methyl, ZR-O-Ethyl, ZR-O-Propyl, ZR-O-Butyl, ZR-O-Octyl,ZR-O-Isopropyl, ZR-O-Isobutyl, ZR-O-butyl.

In einer besonders bevorzugten Ausführungsform weist das Metallsilsesquioxan die Struktur (VII) auf 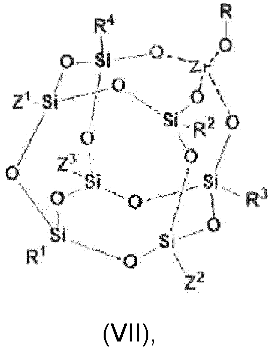
wobei Zr mit OR verknüpft ist, wobei R ausgewählt ist aus der Gruppe bestehend aus -H, -Methyl, -Ethyl, -Propyl, -Butyl, -Octyl, -Isopropyl, und -Isobutyl,
Z¹, Z² und Z³ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und
R¹, R², R³ und R⁴ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.

Das Gewichtsverhältnis des Polyorganosiloxans (a), insbesondere des α, ω-dihydroxyl-terminierten Polydialkylsiloxans, zum Vernetzer beträgt vorzugsweise 100:1 - 2:1, besonders bevorzugt 50:1 bis 5:1, insbesondere 15:1 - 6:1.

Die erfindungsgemäße Zusammensetzung kann über die beschriebenen Komponenten hinaus optional weitere Bestandteile/Komponenten enthalten, insbesondere übliche Additive wie Füllstoffe, Weichmacher, Reaktivverdünner, Farbmittel, Thixotropiermittel, rheologische Additive, Benetzungsmittel, UV-Stabilisatoren, Antioxidantien, Trockenmittel etc. Bevorzugt enthalten die härtbaren Zusammensetzungen erfindungsgemäß mindestens einen weiteren Bestandteil.

Die erfindungsgemäße Zusammensetzung kann vorzugsweise Weichmacher enthalten. Bevorzugt als Weichmacher sind endgruppengecappte Polyethylenglykole, z.B. Polyethylen- oder Polypropylenglykoldialkylether, wobei der Alkylrest ein bis vier C-Atome beträgt, insbesondere Dimethyl- und Diethylether von Diethylenglykol und Dipropylenglykol. Bevorzugt als Weichmacher sind auch Diurethane, welche sich beispielsweise durch Umsetzung von Diolen mit OH-Endgruppen mit monofunktionellen Isocyanaten herstellen lassen. In einer bevorzugten Ausführungsform der Erfindung werden Polyalkylsiloxane, besonders bevorzugt Polydimethylsiloxan als Weichmacher eingesetzt.

Die härtbaren Zusammensetzungen enthalten Weichmacher vorzugsweise in einer Menge von 2 bis 50 Gew.-%, bevorzugt in einer Menge von 10 bis 40 Gew.-%, besonders bevorzugt in einer Menge von 20 bis 35 Gew.-%, jeweils bezogen auf das Gesamtgewicht der Zusammensetzung. Wird ein Gemisch mehrerer Weichmacher eingesetzt, beziehen sich die Mengenangaben auf die Gesamtmenge an Weichmacher in der Zusammensetzung.

Sofern die Viskosität der härtbaren Zusammensetzung herabgesetzt werden soll, können auch Reaktivverdünner zugesetzt werden. Als Reaktivverdünner geeignet sind Verbindungen, die mit der Zusammensetzung mischbar sind und über mindestens eine mit dem Polymer reaktive Gruppe verfügen. Vorzugsweise weist der Reaktivverdünner mindestens eine funktionelle Gruppe auf, die mit Feuchtigkeit oder Luftsauerstoff reagiert. Beispiele sind Isocyanatgruppen, Silylgruppen oder ungesättigte Gruppen wie Vinylgruppen. Zur Herstellung bevorzugter Reaktivverdünner können zum Beispiel entsprechende Polyolkomponenten mit einem mindestens difunktionellen Isocyanat umgesetzt werden.

Die erfindungsgemäße Zusammensetzung kann ferner Füllstoffe enthalten. Hier eignen sich beispielsweise Kreide, Kalkmehl, gefällte und/oder pyrogene Kieselsäure, Zeolithe, Bentonite, Magnesiumcarbonat, Tonerde, Talg, Titanoxid, Eisenoxid, Zinkoxid, Quarz, Sand, Glimmer und andere pulverförmige bzw. gemahlene Mineralstoffe. Weiterhin können auch organische Füllstoffe eingesetzt werden, insbesondere Holzfasern, Holzmehl, Sägespäne, Zellstoff, Baumwolle, Baumwolle, Häcksel.

In einer besonders bevorzugten Ausführungsform der Erfindung wird der Zusammensetzung Kieselsäure als Füllstoff zugesetzt, in unbehandelter und/oder behandelter, bevorzugt hydrophobierter Form, besonders bevorzugt pyrogenes Siliziumdioxid, auch als pyrogene Kieselsäure bezeichnet. In einer besonders bevorzugten Ausführungsform der Erfindung wird der härtbaren Zusammensetzung eine Mischung aus unbehandelter und hydrophobierter Kieselsäure als Füllstoff zugesetzt.

Die Füllstoffe werden vorzugsweise in einer Menge von 1 bis 60 Gew.-%, besonders bevorzugt 2 bis 20 Gew.-%, und ganz besonders bevorzugt 5 bis 15 Gew.-%, jeweils bezogen auf das Gesamtgewicht der Zusammensetzung eingesetzt. Es können auch Gemische mehrerer Füllstoffe eingesetzt werden. In diesem Fall beziehen sich die Mengenangaben auf die Gesamtmenge an Füllstoff in der Zusammensetzung.

Für manche Anwendungen sind Additive oder Füllstoffe bevorzugt, die den Zubereitungen Thixotropie verleihen. Solche Füllstoffe werden auch als rheologische Hilfsmittel beschrieben, z. B. hydrogenisiertes Rizinusöl, Fettsäureamide oder quellbare Kunststoffe.

Die erfindungsgemäße Zusammensetzung kann über das heterocyclische Azasilan hinaus zusätzliche Haftvermittler enthalten. Als Haftvermittler geeignet sind hier beispielsweise Harze, z.B. aliphatische oder petrochemische Harze und modifizierte Phenolharze sowie Terpenoligomere. Solche Harze finden beispielsweise als Haftvermittler für Haftklebstoffe und Beschichtungsmaterialien Verwendung. Ebenfalls geeignet sind die Terpen-Phenol-Harze.

Vorzugsweise enthält die härtbare Zusammensetzung mindestens einen Stabilisator, ausgewählt aus der Gruppe bestehend aus Antioxidantien, UV-Stabilisatoren und Trockenmitteln. Antioxidantien sind vorzugsweise bis zu etwa 6 Gew.-%, insbesondere bis zu etwa 4 Gew.-% enthalten. Es ist im Rahmen der vorliegenden Erfindung bevorzugt, wenn ein UV-Stabilisator eingesetzt wird, der eine Silylgruppe trägt und beim Vernetzen bzw. Aushärten in das Produkt einpolymerisiert wird.

Die erfindungsgemäße Zusammensetzung kann zudem durch Trockenmittel gegenüber eindringender Feuchtigkeit stabilisiert werden, um die Lagerfähigkeit noch weiter zu erhöhen. Als Trockenmittel eignen sich alle Verbindungen, die mit Wasser unter Bildung einer gegenüber den in der Zubereitung vorliegenden reaktiven Gruppen zu inerten Gruppe reagieren. Als Trockenmittel eignen sich beispielsweise Isocyanate und Silane, beispielsweise Vinylsilane wie 3-Vinylpropyltriethoxysilan, Oximosilane oder Carbamatosilane. Aber auch die Verwendung von Methyl-, Ethyl- oder Vinyltrimethoxysilan, Tetramethyl- oder -ethylethoxysilan ist möglich. Vinyltrimethoxysilan und Tetraethoxysilan sind besonders bevorzugt.

In einer bevorzugten Ausführungsform der Erfindung sind die Komponenten der Zusammensetzung miteinander vermischt, insbesondere in Form einer einphasigen Mischung.

Die Erfindung betrifft auch ein Verfahren zur Herstellung der erfindungsgemäßen härtbaren Zusammensetzung wobei die Komponenten (a) bis (d), und gegebenenfalls weitere Komponenten, miteinander gemischt werden.

Die Erfindung betrifft ferner die Verwendung der erfindungsgemäßen härtbaren Zusammensetzung, insbesondre als Dichtmittel, Klebstoff, Beschichtungsmittel, Fugenmaterial, Vergussmasse, Adhäsiv und/oder in Farben.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen. Die genannten Vorteile von Merkmalen oder von Kombinationen mehrerer Merkmale sind lediglich beispielhaft und können alternativ oder kumulativ zur Wirkung kommen. Die Kombination von Merkmalen unterschiedlicher Ausführungsformen der Erfindung oder von Merkmalen von unterschiedlichen Patentansprüchen ist abweichend von den gewählten Rückbezügen der Patentansprüche möglich.

Die nachfolgenden Beispiele dienen zur weiteren Erläuterung der Erfindung, ohne die Erfindung darauf zu beschränken.

### Beispiele

### Beispiel 1:

Es wird eine Silikonkautschukmischung gemäß folgender Formulierung hergestellt:
570g alpha-omega hydroxyl-terminiertes Polydimethylsiloxan mit Viskosität 80.000 cSt
270g Polydimethylsiloxan mit Viskosität 100 cSt
50g Hochdisperse Kieselsäure unbehandelt
50g Hochdisperse Kieselsäure hydrophobiert
Gemisch aus 40,7g Methyl-tris(ethyllaktato)silan und 8,7g Tetraethyllaktatosilan 12,0g Haftvermittler Butyldimethoxycyclosilan (BDC, N-n-Butyl-1-aza-2,2-di-methoxy-2-silacyclopentan)
0,5g Katalysator iBu-POSS-Zr-OEt
1,5g Octylphosphonsäure

Der Dichtstoff hat nach Ausbringung an Luft:
- eine Hautbildungszeit von 5 min
- eine Klebfreizeit von 35 min
- eine Frühbeanspruchung nach 180 min
- eine vollständige Aushärtung nach 24 h
- ein transparentes Aussehen
- eine Shore-Härte A von 18
- eine gute Haftung auf Holz, Holz lackiert, Holz lasiert, Aluminium, Aluminium pulverbeschichtet, Glas, PVC, Polyamid, Stahl, Beton etc.

Der Dichtstoff zeichnet sich ferner durch seine ausgezeichnete Lagerstabilität aus. Nach 8 Wochen Lagerung bei 50°C in der Kartusche weist der Dichtstoff noch die gleichen Eigenschaften auf, wie bei der ersten Ausbringung.

### Beispiel 2:

Es wird eine Silikonkautschukmischung gemäß folgender Formulierung hergestellt: 570g alpha-omega hydroxyl-terminiertes Polydimethylsiloxan mit Viskosität 80.000 cSt
270g Polydimethylsiloxan mit Viskosität 100 cSt
50g Hochdisperse Kieselsäure unbehandelt
50g Hochdisperse Kieselsäure hydrophobiert
49,4g Methyl-tris(ethyllaktato)silan
12,0g Haftvermittler Butyldimethoxycyclosilan (BDC, N-n-Butyl-1-aza-2,2-di-methoxy-2-silacyclopentan)
1,0g Katalysator iBu-POSS-Zr-OEt
1,5g Octylphosphonsäure

Der Dichtstoff hat nach Ausbringung an Luft:
- eine Hautbildungszeit von 11 min
- eine Klebfreizeit von 65 min
- eine Frühbeanspruchung nach 280 min
- eine vollständige Aushärtung nach 24 h
- ein transparentes Aussehen
- eine Shore-Härte A von 17
- eine gute Haftung auf Holz, Holz lackiert, Holz lasiert, Aluminium, Aluminium pulverbeschichtet, Glas, PVC, Polyamid, Stahl, Beton etc.

Der Dichtstoff zeichnet sich ferner durch seine ausgezeichnete Lagerstabilität aus.

Nach 8 Wochen Lagerung bei 50°C in der Kartusche weist der Dichtstoff noch die gleichen Eigenschaften auf, wie bei der ersten Ausbringung.

Zur detaillierten Untersuchung und zum Vergleich mit einem etablierten Silikondichtstoff wurden das nachfolgende Beispiel 3 und das Vergleichsbeispiel im Detail untersucht.

### Beispiel 3

Analog zu den Beispielen 1 und 2 wurde eine Silikonkautschukmischung gemäß folgender Formulierung hergestellt:

| | **Stoff** | **Gew.-%** |
|---|---|---|
| 1 | Polymer 80.000 cSt (α-ω-Dihydroxy-dimethyl-polysiloxan) | 57,1 |
| 2 | Weichmacher 100 cSt (Polydimethylsiloxan) | 26,45 |
| 3 | Vernetzer 1: (Methyl-tris(ethyllactato)silan) | 3,6 |
| 4 | Vernetzer 2: (Tetra(ethyllactato)silan) | 1,4 |
| 5 | Pyrogene Kieselsäure, hydrophob (BET-Oberfläche 130 - 150 m²/g) | 5,0 |
| 6 | Pyrogene Kieselsäure, unbehandelt (BET-Oberfläche 130 - 150 m²/g) | 5,0 |
| 7 | Haftvermittler: BnDC (Benzyldimethoxycyclosilan, N-Benzyl-1-aza-2,2-dimethoxy-2-silacyclopentan) | 1,2 |
| 8 | Katalysator: iBu-POSS-Zr-OEt | 0,1 |
| 9 | Stabilisator Octylphosphonsäure | 0,15 |

### Vergleichsbeispiel (Stand der Technik)

| | **Komponente** | **Gew.-%** |
|---|---|---|
| 1 | α,ω-Dihydroxy-dimethyl-polysiloxan 80.000 cSt | 52,1 |
| 2 | Polydimethylsiloxan (PDMS) 100 cSt | 32,9 |
| 3 | Vernetzer 1: Vinyl-tris(ethyllactato)silan | 2,5 |
| 4 | Vernetzer 2: Methyl-tris(ethyllactato)silan | 2,5 |
| 5 | Aminopropyltriethoxysilan (AMEO) | 0,2 |
| 6 | Pyrogene Kieselsäure, unbehandelt BET-Oberfläche 130-150 m²/g | 8,5 |
| 7 | Katalysator 1:1 (w/w) Mischung aus Dialkylzinoxid und Tetraalkoxysilan | 0,1 |
| 8 | Haftvermittler: N-n-Butyl-1-aza-2,2-di-methoxy-2-silacyclopentan (BDC)(BDC) | 1,2 |

Die optische Beschaffenheit der Zusammensetzungen von Beispiel 1 bis 3 und dem Vergleichsbeispiel bei Ausbringung waren vergleichbar, ebenso die mechanischen Eigenschaften nach der Aushärtung. Allerdings zeigte sich, dass die Silikonkautschukmischungen nach Beispiel 1 bis 3 gegenüber dem Vergleichsbeispiel eine verbesserte Lagerstabilität aufwiesen und die Haftung verbessert war. Die Zusammensetzung nach Beispiel 1 bis 3 war nach Lagerung bei 50 °C nach acht Wochen weiterhin farblos, wohingegen die Zusammensetzung des Vergleichsbeispiels nach acht Wochen bei 50 °C gelblich war. Bezüglich der Haftung wies die Zusammensetzung nach Beispiel 1 bis 3 auf Plexiglas, Polycarbonat und Polystyrol eine verbesserte Haftung gegenüber dem Vergleichsbeispiel auf. Ein zusätzlicher Vorteil der obigen erfindungsgemäßen Beispiele ist es, dass auf toxisches Zinn verzichtet werden konnte.

Die obigen Beispiele zeigen gegenüber dem Dichtstoff des obigen Vergleichsbeispiels, dass die mechanischen Eigenschaften der erfindungsgemäßen Zusammensetzungen gegenüber bekannten Silikonkautschukzusammensetzungen gleich gut sind und gleichzeitig die Lagerstabilität und die Haftung auf Kunststoffen wie Plexiglas, Polycarbonat oder Polystyrol verbessert werden konnten.

## Patentansprüche

1. Härtbare Zusammensetzung, umfassend
(a) ein Polyorganosiloxan der Formel HO-(SiR^{l}R^{m}O)ₒ-H, wobei
jedes R^{l} und R^{m} unabhängig voneinander steht für
einen optional substituierten Alkyl-, Alkenyl- oder Alkinylrest;
einen optional substituierten cycloaliphatischen Rest, Arylrest oder Aralkylrest;
oder einen optional substituierten heteroalicyclischen Rest oder Heteroarylrest;
und o eine ganze Zahl von 5 bis 5000 ist,
(b) einen Vernetzer der Formel Si(R)ₘ(R^{a})₄₋ₘ, wobei
jedes R unabhängig voneinander steht für
einen optional substituierten Alkyl-, Alkenyl- oder Alkinylrest;
einen optional substituierten cycloaliphatischen Rest, Arylrest oder Aralkylrest;
oder einen optional substituierten heteroalicyclischen Rest oder Heteroarylrest;
m eine ganze Zahl von 0 bis 2 ist,
jedes R^{a} unabhängig voneinander ausgewählt ist aus der Gruppe bestehend aus
(b1) einem Hydroxycarbonsäureesterrest der Formel (I): 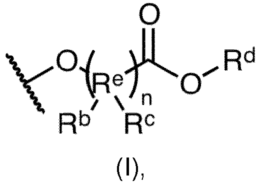 worin
jedes R^{b}und R^{c} jeweils unabhängig voneinander steht für
Wasserstoff;
einen optional substituierten Alkyl-, Alkenyl- oder Alkinylrest;
einen optional substituierten cycloaliphatischen Rest, Arylrest oder Aralkylrest;
oder einen optional substituierten heteroalicyclischen Rest oder Heteroarylrest;
jedes R^{d} unabhängig voneinander steht für
einen optional substituierten Alkyl-, Alkenyl- oder Alkinylrest;
einen optional substituierten cycloaliphatischen Rest, Arylrest oder Aralkylrest; oder
einen optional substituierten heteroalicyclischen Rest oder Heteroarylrest;
jedes R^{e} unabhängig voneinander steht für
Kohlenstoff;
einen optional substituierten cycloaliphatischen Rest, Arylrest oder Aralkylrest;
oder einen optional substituierten heteroalicyclischen Rest oder Heteroarylrest;
und n eine ganze Zahl von 1 bis 10 ist,
(b2) einem Hydroxycarbonsäureamidrest der Formel (II): 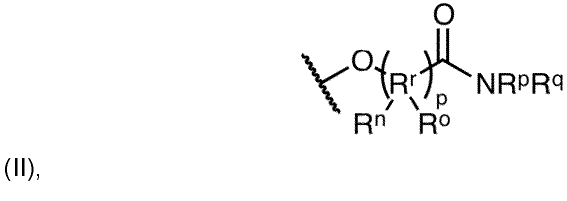 wobei
jedes Rⁿ, R^{o}, R^{p} und R^{q} jeweils unabhängig voneinander steht für
Wasserstoff;
einen optional substituierten Alkyl-, Alkenyl- oder Alkinylrest;
einen optional substituierten cycloaliphatischen Rest, Arylrest oder Aralkylrest; oder
einen optional substituierten heteroalicyclischen Rest oder Heteroarylrest;
R^{r} unabhängig voneinander steht für
Kohlenstoff;
einen optional substituierten cycloaliphatischen Rest, Arylrest oder Aralkylrest; oder
einen optional substituierten heteroalicyclischen Rest oder Heteroarylrest; und p eine ganze Zahl von 1 bis 10 ist,
(b3) einem Carbonsäurerest -O-C(O)-R^{f},
(b4) einem Oximrest -O-N=CR^{g}R^{h}, und
(b5) einem Carbonsäureamidrest -N(Rⁱ)-C(O)-R^{j},
worin
jedes R^{f}, R^{g}, R^{h}, Rⁱ und R^{j} jeweils unabhängig voneinander steht für Wasserstoff;
einen optional substituierten Alkyl-, Alkenyl- oder Alkinylrest;
einen optional substituierten cycloaliphatischen Rest, Arylrest oder Aralkylrest;
oder einen optional substituierten heteroalicyclischen Rest oder Heteroarylrest;
(c) ein heterocyclisches Azasilan, worin N und Si Ringatome sind und direkt miteinander verknüpft sind, und
(d) eine Organophosphonsäure der Formel R-PO(OH)₂, worin
R für
einen optional substituierten Alkyl-, Alkenyl- oder Alkinylrest,
einen optional substituierten cycloaliphatischen Rest, Arylrest oder Aralkylrest,
oder einen optional substituierten heteroalicyclischen Rest oder Heteroarylrest steht.

2. Zusammensetzung nach Anspruch 1, **dadurch gekennzeichnet, dass** die Menge an Organophosphonsäure, bezogen auf die Gesamtmenge an Vernetzer, 0,3 - 30 mol-%, bevorzugt 1 - 10 mol-% beträgt.

3. Zusammensetzung nach Anspruch 1 oder 2, **dadurch gekennzeichnet, dass** die Organophosphonsäure eine Alkylphosphonsäure mit 2 bis 12 Kohlenstoffatomen ist, bevorzugt Octylphosphonsäure.

4. Zusammensetzung nach einem der Ansprüche 1 bis 3, **dadurch gekennzeichnet, dass** die Zusammensetzung zusätzlich einen Metallkatalysator umfasst, bevorzugt einen Metallkatalysator, der kein Zinn enthält.

5. Zusammensetzung nach Anspruch 4, **dadurch gekennzeichnet, dass** das Metall des Metallkatalysators ausgewählt ist aus der Gruppe bestehend aus Na, Zn, Sc, Nd, Ti, Zr, Hf, V, Fe, Pt, Cu, Ga, und Bi, bevorzugt ausgewählt ist aus der Gruppe bestehend aus Zn, Ti, Zr, Hf, V, Fe und Bi.

6. Zusammensetzung nach Anspruch 4 oder 5, **dadurch gekennzeichnet, dass** das Metall des Metallkatalysators Zr ist.

7. Zusammensetzung nach einem der Ansprüche 4 bis 6, **dadurch gekennzeichnet, dass** der Metallkatalysator ein Metallsiloxan der Formel
R*_{A}Si_{B}O_{C}M_{D},
wobei
jedes R* unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl, -OH und -O-(C1- bis C20-Alkyl),
M das Metall ist,
A eine ganze Zahl von 4 bis 19 ist,
B eine ganze Zahl von 4 bis 10 ist,
C eine ganze Zahl von 8 bis 30 ist, und
D eine ganze Zahl von 1 bis 8 ist.

8. Zusammensetzung nach Anspruch 7, **dadurch gekennzeichnet, dass** das Metallsiloxan ein polyhedrales Metallsilsesquioxan ist, insbesondere ein polyhedrales Titan- und/oder Zirkoniumsilsesquioxan.

9. Zusammensetzung nach einem der Ansprüche 1 bis 8, **dadurch gekennzeichnet, dass** im Vernetzer jedes R^{a} unabhängig voneinander ausgewählt ist aus der Gruppe bestehend aus
(b1) einem Hydroxycarbonsäureesterrest der Formel (I), worin die Reste wie im Anspruch 1 definiert sind, und
(b2) einem Hydroxycarbonsäureamidrest der Formel (II), worin die Reste wie im Anspruch 1 definiert sind.

10. Zusammensetzung nach einem der Ansprüche 1 bis 9, **dadurch gekennzeichnet, dass** im Vernetzer R^{a} ein Hydroxycarbonsäureesterrest der Formel (I) ist, bevorzugt mit n = 1.

11. Zusammensetzung nach einem der Ansprüche 1 bis 10, **dadurch gekennzeichnet, dass** das heterocyclische Azasilan eine Verbindung der Formel 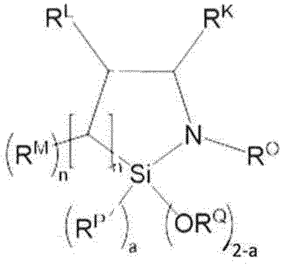
ist, wobei
a = 0,1 oder 2 ist;
n = 0 - 6 ist;
jedes R^{K}, R^{L}, R^{M}, R^{O}, R^{P} und R^{Q} unabhängig voneinander H oder eine optional substituierte, geradkettige oder verzweigte C1- bis C20-Alkylgruppe, eine optional substituierte, geradkettige oder verzweigte C2- bis C20-Alke-nylgruppe, eine optional substituierte C3- bis C20-Cycloalkylgruppe, eine optional substituierte C4- bis C20-Cycloalkenylgruppe, eine optional substituierte, geradkettige, verzweigte oder cyclische C4- bis C20-Alkinylgruppe oder eine optional substituierte, geradkettige oder verzweigte C2- bis C20-Hete-roalkylgruppe, eine optional substituierte, geradkettige, verzweigte oder cyclische C3- bis C20-Heteroalkenylgruppe oder eine optional substituierte C4-bis C14-Aryl- oder Heteroarylgruppe bedeutet oder zwei Reste R^{K}, R^{L}, R^{M}, R^{O}, R^{P} und R^{Q} zusammen einen 5- bis 8-gliedrigen Ring ausbilden.

12. Zusammensetzung nach einem der Ansprüche 1 bis 11, **dadurch gekennzeichnet, dass** das heterocyclische Azasilan N-n-Butyl-1-aza-2,2-dimethoxy-2-silacyclopentan, 2,2-Diethoxy-1-(3-triethoxysilylpropyl)aza-2-silacyclopen-tan und/oder 2,2-Diethoxy-1-(trimethylsilyl)aza-2-silacyclopentan ist, bevorzugt N-n-Butyl-1-aza-2,2-dimethoxy-2-silacyclopentan.

13. Zusammensetzung nach einem der Ansprüche 1 bis 12, **dadurch gekennzeichnet, dass** das Polyorganosiloxan Polydimethylsiloxan ist.

14. Verfahren zur Herstellung einer härtbaren Zusammensetzung nach einem der Ansprüche 1 bis 13, **dadurch gekennzeichnet, dass** die Komponenten (a) bis (d) und gegebenenfalls weitere Komponenten miteinander gemischt werden.

15. Verwendung einer härtbaren Zusammensetzung nach einem der Ansprüche 1 bis 13 als Dichtmittel, Klebstoff, Beschichtungsmittel, Fugenmaterial, Vergussmasse, Adhäsiv oder in Farben.

## Claims

1. Curable composition comprising
(a) a polyorganosiloxane of the formula HO-(SiR^{l}R^{m}O)ₒ-H, wherein
each R^{l} and R^{m} independently represents
an optionally substituted alkyl, alkenyl or alkynyl residue;
an optionally substituted cycloaliphatic residue, aryl residue or aralkyl residue; or an optionally substituted heteroalicyclic residue or heteroaryl residue;
and o is an integer from 5 to 5000,
(b) a crosslinker of the formula Si(R)ₘ(R^{a})₄₋ₘ, wherein
each R independently represents
an optionally substituted alkyl, alkenyl or alkynyl residue;
an optionally substituted cycloaliphatic residue, aryl residue or aralkyl residue; or an optionally substituted heteroalicyclic residue or heteroaryl residue;
m is an integer from 0 to 2,
each R^{a} is independently selected from the group consisting of
(b1) a hydroxycarboxylic acid ester residue of the formula (I): 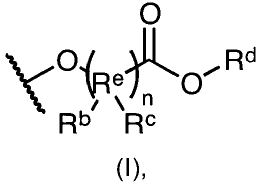 wherein
each R^{b} and R^{c} independently of each other represents hydrogen;
an optionally substituted alkyl, alkenyl or alkynyl residue;
an optionally substituted cycloaliphatic residue, aryl residue or aralkyl residue; or an optionally substituted heteroalicyclic residue or heteroaryl residue;
each R^{d} independently represents
an optionally substituted alkyl, alkenyl or alkynyl residue;
an optionally substituted cycloaliphatic residue, aryl residue or aralkyl residue; or
an optionally substituted heteroalicyclic residue or heteroaryl residue;
each R^{e} independently represents
carbon;
an optionally substituted cycloaliphatic residue, aryl residue or aralkyl residue; or an optionally substituted heteroalicyclic residue or heteroaryl residue;
and n is an integer from 1 to 10,
(b2) a hydroxycarboxamide residue of the formula (II): 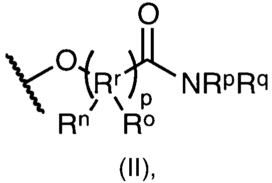 wherein
each Rⁿ, R^{o}, R^{p} and R^{q} independently of each other represents hydrogen;
an optionally substituted alkyl, alkenyl or alkynyl residue;
an optionally substituted cycloaliphatic residue, aryl residue or aralkyl residue; or
an optionally substituted heteroalicyclic residue or heteroaryl residue;
R^{r} independently of each other represents
carbon;
an optionally substituted cycloaliphatic residue, aryl residue or aralkyl residue; or
an optionally substituted heteroalicyclic residue or heteroaryl residue;
and p is an integer from 1 to 10,
(b3) a carboxylic acid residue -O-C(O)-R^{f},
(b4) an oxime residue -O-N=CR^{g}R^{h}, and
(b5) a carboxylic acid amide residue -N(Rⁱ)-C(O)-R^{j},
wherein each R^{f}, R^{g}, R^{h}, Rⁱ and R^{j} independently of each other represents hydrogen;
an optionally substituted alkyl, alkenyl or alkynyl residue;
an optionally substituted cycloaliphatic residue, aryl residue or aralkyl residue; or an optionally substituted heteroalicyclic residue or heteroaryl residue;
(c) a heterocyclic azasilane, wherein N and Si are ring atoms and are directly linked to each other, and
(d) an organophosphonic acid of the formula R-PO(OH)₂, wherein
R represents
an optionally substituted alkyl, alkenyl or alkynyl residue,
an optionally substituted cycloaliphatic residue, aryl residue or aralkyl residue, or an optionally substituted heteroalicyclic residue or heteroaryl residue.

2. Composition according to claim 1, **characterized in that** the amount of organophosphonic acid, based on the total amount of crosslinker, is 0.3 - 30 mol%, preferably 1 - 10 mol%.

3. Composition according to claim 1 or 2, **characterized in that** the organophosphonic acid is an alkylphosphonic acid having 2 to 12 carbon atoms, preferably octylphosphonic acid.

4. Composition according to any one of claims 1 to 3, **characterized in that** the composition additionally comprises a metal catalyst, preferably a metal catalyst which does not contain tin.

5. Composition according to claim 4, **characterized in that** the metal of the metal catalyst is selected from the group consisting of Na, Zn, Sc, Nd, Ti, Zr, Hf, V, Fe, Pt, Cu, Ga, and Bi, preferably selected from the group consisting of Zn, Ti, Zr, Hf, V, Fe and Bi.

6. Composition according to claim 4 or 5, **characterized in that** the metal of the metal catalyst is Zr.

7. Composition according to any one of claims 4 to 6, **characterized in that** the metal catalyst is a metal siloxane of the formula
R*_{A}Si_{B}O_{C}M_{D},
wherein
each R* is independently selected from the group consisting of optionally substituted C1 to C20 alkyl, optionally substituted C3 to C6 cycloalkyl, optionally substituted C2 to C20 alkenyl, optionally substituted C6 to C10 aryl,
-OH and -O-(C1 to C20 alkyl),
M is the metal,
A is an integer from 4 to 19,
B is an integer from 4 to 10,
C is an integer from 8 to 30, and
D is an integer from 1 to 8.

8. Composition according to claim 7, **characterized in that** the metal siloxane is a polyhedral metal silsesquioxane, in particular a polyhedral titanium and/or zirconium silsesquioxane.

9. Composition according to any one of claims 1 to 8, **characterized in that** in the crosslinker each R^{a} is independently selected from the group consisting of
(b1) a hydroxycarboxylic acid ester residue of formula (I) wherein the residues are as defined in claim 1, and
(b2) a hydroxycarboxylic acid amide residue of formula (II) wherein the residues are as defined in claim 1.

10. Composition according to any one of claims 1 to 9, **characterized in that** in the crosslinker R^{a} is a hydroxycarboxylic acid ester residue of the formula (I), preferably with n = 1.

11. Composition according to any one of claims 1 to 10, **characterized in that** the heterocyclic azasilane is a compound of the formula 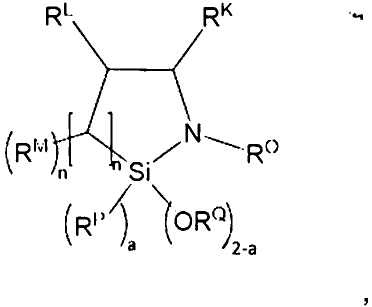 wherein
a = 0,1 or 2;
n = 0 - 6;
each R^{K}, R^{L}, R^{M}, R^{O}, R^{P} and R^{Q} is independently H or an optionally substituted straight-chain or branched C1 to C20 alkyl group, an optionally substituted straight-chain or branched C2 to C20 alkenyl group, an optionally substituted C3 to C20 cycloalkyl group, an optionally substituted C4 to C20 cycloalkenyl group, an optionally substituted straight-chain, branched or cyclic C4 to C20 alkynyl group or an optionally substituted, straight-chain or branched C2 to C20 heteroalkyl group, an optionally substituted, straight-chain, branched or cyclic C3 to C20 heteroalkenyl group or an optionally substituted C4 to C14 aryl or heteroaryl group, or two residues R^{K}, R^{L}, R^{M}, R^{O}, R^{P} and R^{Q} together form a 5- to 8-membered ring.

12. Composition according to any one of claims 1 to 11, **characterized in that** the heterocyclic azasilane is N-n-butyl-1-aza-2,2-dimethoxy-2-silacyclopentane, 2,2-diethoxy-1-(3-triethoxysilylpropyl)aza-2-silacyclopentane and/or 2,2-di-ethoxy-1-(trimethylsilyl)aza-2-silacyclopentane, preferably N-n-butyl-1-aza-2,2-dimethoxy-2-silacyclopentane.

13. Composition according to any one of claims 1 to 12, **characterized in that** the polyorganosiloxane is polydimethylsiloxane.

14. Method for preparing a curable composition according to any one of claims 1 to 13, **characterized in that** components (a) to (d) and optionally further components are mixed.

15. Use of a curable composition according to any one of claims 1 to 13 as a sealant, glue, coating agent, jointing material, potting compound, adhesive or in paints.

## Revendications

1. Composition durcissable contenant
(a) un polyorganosiloxane de formule HO-(SiR^{l}R^{m}O)ₒ-H, où
chaque R^{l} et R^{m} représente indépendamment
un radical alkyle, alcényle ou alcynyle éventuellement substitué ;
un radical cycloaliphatique, aryle ou aralkyle éventuellement substitué ;
ou un radical hétéroalicyclique ou hétéroaryle éventuellement substitué ; et o est un nombre entier de 5 à 5000,
(b) un agent de réticulation de formule Si(R)ₘ(R^{a})₄₋ₘ, où
chaque R représente indépendamment
un radical alkyle, alcényle ou alcynyle éventuellement substitué ;
un radical cycloaliphatique, aryle ou aralkyle éventuellement substitué ;
ou un radical hétéroalicyclique ou hétéroaryle éventuellement substitué ; m est un nombre entier de 0 à 2,
chaque R^{a} est indépendamment choisi dans le groupe constitué par
(b1) un radical ester d'acide hydroxycarboxylique de formule (I) : 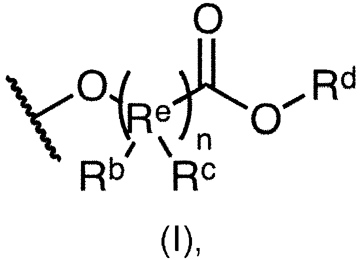 dans laquelle
chaque R^{b} et R^{c} représente chacun indépendamment
l'hydrogène ;
un radical alkyle, alcényle ou alcynyle éventuellement substitué ;
un radical cycloaliphatique, aryle ou aralkyle éventuellement substitué ;
ou un radical hétéroalicyclique ou hétéroaryle éventuellement substitué ;
chaque R^{d} représente indépendamment
un radical alkyle, alcényle ou alcynyle éventuellement substitué ;
un radical cycloaliphatique, aryle ou aralkyle éventuellement substitué ;
ou
un radical hétéroalicyclique ou hétéroaryle éventuellement substitué ;
chaque R^{e} représente indépendamment
le carbone ;
un radical cycloaliphatique, aryle ou aralkyle éventuellement substitué ;
ou un radical hétéroalicyclique ou hétéroaryle éventuellement substitué ;
et n est un nombre entier de 1 à 10,
(b2) un radical amide d'acide hydroxycarboxylique de formule (II) : 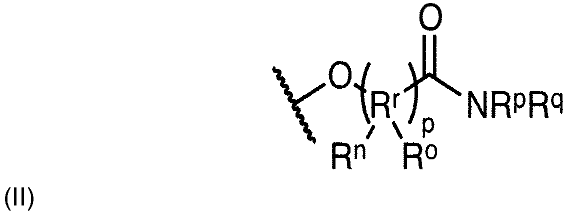 dans laquelle
chaque Rⁿ, R^{o}, R^{p} et R^{q} représente chacun indépendamment
l'hydrogène ;
un radical alkyle, alcényle ou alcynyle éventuellement substitué ;
un radical cycloaliphatique, aryle ou aralkyle éventuellement substitué ;
ou
un radical hétéroalicyclique ou hétéroaryle éventuellement substitué ;
R^{r} représente indépendamment
le carbone ;
un radical cycloaliphatique, aryle ou aralkyle éventuellement substitué ;
ou
un radical hétéroalicyclique ou hétéroaryle éventuellement substitué ;
et p est un nombre entier de 1 à 10,
(b3) un radical acide carboxylique -O-C(O)-R^{f},
(b4) un radical oxime -O-N=CR^{g}R^{h}, et
(b5) un radical amide d'acide carboxylique -N(Rⁱ)-C(O)-R^{j},
où
chaque R^{f}, R^{g}, R^{h}, Rⁱ et R^{j} représente chacun indépendamment
l'hydrogène ;
un radical alkyle, alcényle ou alcynyle éventuellement substitué ;
un radical cycloaliphatique, aryle ou aralkyle éventuellement substitué ;
ou un radical hétéroalicyclique ou hétéroaryle éventuellement substitué ;
(c) un azasilane hétérocyclique dans lequel N et Si sont des atomes dans le cycle et sont directement liés l'un à l'autre, et
(d) un acide organophosphonique de formule R-PO(OH)₂, où
R représente
un radical alkyle, alcényle ou alcynyle éventuellement substitué,
un radical cycloaliphatique, aryle ou aralkyle éventuellement substitué,
ou un radical hétéroalicyclique ou hétéroaryle éventuellement substitué.

2. Composition selon la revendication 1,
**caractérisée en ce que** la quantité d'acide organophosphonique, par rapport à la quantité totale d'agent de réticulation, est de 0,3 à 30 % en moles, de préférence de 1 à 10 % en moles.

3. Composition selon la revendication 1 ou 2,
**caractérisée en ce que** l'acide organophosphonique est un acide alkylphosphonique comportant 2 à 12 atomes de carbone, de préférence l'acide octylphosphonique.

4. Composition selon l'une des revendications 1 à 3,
**caractérisée en ce que** la composition comprend en outre un catalyseur métallique, de préférence un catalyseur métallique qui ne contient pas d'étain.

5. Composition selon la revendication 4,
**caractérisée en ce que** le métal du catalyseur métallique est choisi dans le groupe constitué par Na, Zn, Sc, Nd, Ti, Zr, Hf, V, Fe, Pt, Cu, Ga et Bi, de préférence choisi dans le groupe constitué par Zn, Ti, Zr, Hf, V, Fe et Bi.

6. Composition selon la revendication 4 ou 5,
**caractérisée en ce que** le métal du catalyseur métallique est le Zr.

7. Composition selon l'une des revendications 4 à 6,
**caractérisée en ce que** le catalyseur métallique est un métallosiloxane de formule R*_{A}Si_{B}O_{C}M_{D}, où
chaque R* est choisi indépendamment dans le groupe constitué par un alkyle en C1 à C20 éventuellement substitué, un cycloalkyle en C3 à C6 éventuellement substitué, un alcényle en C2 à C20 éventuellement substitué, un aryle en C6 à C10 éventuellement substitué, -OH et -O-(alkyle en C1 à C20),
M est le métal,
A est un nombre entier de 4 à 19,
B est un nombre entier de 4 à 10,
C est un nombre entier de 8 à 30, et
D est un nombre entier de 1 à 8.

8. Composition selon la revendication 7,
**caractérisée en ce que** le métallosiloxane est un silsesquioxane polyédrique de métal, en particulier un silsesquioxane polyédrique de titane et/ou de zirconium.

9. Composition selon l'une des revendications 1 à 8,
**caractérisée en ce que**, dans l'agent de réticulation, chaque R^{a} est choisi indépendamment dans le groupe constitué par
(b1) un radical ester d'acide hydroxycarboxylique de formule (I), où les radicaux sont tels que définis dans la revendication 1, et
(b2) un radical amide d'acide hydroxycarboxylique de formule (II), où les radicaux sont tels que définis dans la revendication 1.

10. Composition selon l'une des revendications 1 à 9,
**caractérisée en ce que**, dans l'agent de réticulation, R^{a} est un radical ester d'acide hydroxycarboxylique de formule (I), de préférence avec n = 1 .

11. Composition selon l'une des revendications 1 à 10,
**caractérisée en ce que** l'azasilane hétérocyclique est un composé de formule 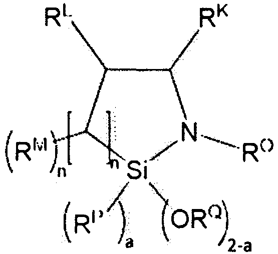 où
a = 0,1 ou 2 ;
n = 0 à 6 ;
chaque R^{K}, R^{L}, R^{M}, R^{O}, R^{P} et R^{Q} représente indépendamment H ou un groupe alkyle en C1 à C20 à chaîne droite ou ramifié éventuellement substitué, un groupe alcényle en C2 à C20 à chaîne droite ou ramifié éventuellement substitué, un groupe cycloalkyle en C3 à C20 éventuellement substitué, un groupe cycloalcényle en C4 à C20 éventuellement substitué, un groupe alcynyle en C4 à C20 à chaîne droite, ramifié ou cyclique éventuellement substitué, ou un groupe hétéroalkyle en C2 à C20 à chaîne droite ou ramifié éventuellement substitué, un groupe hétéroalcényle en C3 à C20 à chaîne droite, ramifié ou cyclique éventuellement substitué, ou un groupe aryle ou hétéroaryle en C4 à C14 éventuellement substitué,
ou deux radicaux R^{K}, R^{L}, R^{M}, R^{O}, R^{P} et R^{Q} forment ensemble un cycle à 5 à 8 chaînons.

12. Composition selon l'une des revendications 1 à 11,
**caractérisée en ce que** l'azasilane hétérocyclique est le N-n-butyl-1-aza-2,2-diméthoxy-2-silacyclopentane, le 2,2-diéthoxy-1-(3-triéthoxysilylpropyl)aza-2-silacyclopentane et/ou le 2,2-diéthoxy-1-(triméthylsilyl)aza-2-silacyclopentane, de préférence le N-n-butyl-1-aza-2,2-diméthoxy-2-silacyclopentane.

13. Composition selon l'une des revendications 1 à 12,
**caractérisée en ce que** le polyorganosiloxane est du polydiméthylsiloxane.

14. Procédé de préparation d'une composition durcissable selon l'une des revendications 1 à 13,
**caractérisé en ce que** les composants (a) à (d) et, le cas échéant, d'autres composants sont mélangés entre eux.

15. Utilisation d'une composition durcissable selon l'une des revendications 1 à 13 comme produit d'étanchéité, colle, agent de revêtement, matériau de jointoiement, masse de scellement, adhésif ou dans des peintures.
